# EUROPEAN PATENT SPECIFICATION

(11) **EP 3 572 889 B1**
(45) Date of publication and mention of the grant of the patent: **07.07.2021**
(21) Application number: 17897091.9
(22) Date of filing: 25.05.2017
(51) Int. Cl.: H02J 9/00, B60R 16/03, H02J 7/00

(54) **CONTROL CIRCUIT AND CIRCUIT CONTROL METHOD**
STEUERUNGSSCHALTUNG UND SCHALTUNGSSTEUERUNGSVERFAHREN
CIRCUIT DE COMMANDE ET PROCÉDÉ DE COMMANDE DE CIRCUIT

(30) Priority: 17.02.2017 CN 201710086717
(43) Date of publication of application: 27.11.2019
(73) Proprietor: Huawei Technologies Co., Ltd., Longgang District Shenzhen, Guangdong 518129 (CN)
(72) Inventor: GAO, Chunyu, Shenzhen Guangdong 518129 (CN); XIE, Bo, Shenzhen Guangdong 518129 (CN)
(74) Representative: Gill Jennings & Every LLP
(86) International application number: PCT/CN2017/085911
(87) International publication number: WO 2018/149045

(56) References cited:
- EP-A1- 2 528 188
- EP-A2- 2 336 843
- CN-A- 102 109 829
- CN-A- 103 607 680
- CN-A- 105 204 601
- CN-U- 205 017 207
- JP-A- 2000 358 001
- US-A1- 2015 188 347
- US-B1- 6 473 852

## Description

### TECHNICAL FIELD

Embodiments of this application relate to the circuit field, and in particular, to a control circuit and a circuit control method.

### BACKGROUND

In some control circuits, a power source supplies power to a load through a power supply path, and a switch unit is provided in the power supply path between the power source and the load to easily control continuity in the power supply path.

In the prior art, the switch unit is usually controlled by a user manually. Alternatively, a load uses at least two power sources, for example, a first power source and a second power source; power connection is implemented between the first power source and the load through manual control; a switch unit is provided in a power supply path between the second power source and the load, and the switch unit is controlled by the load. The load is first powered by the first power source, and when the first power source stops supplying power due to a reason such as a fault, the load controls the switch unit to be closed, so that the second power source supplies power to the load.

For example, a vehicular telematics box (TBOX) is provided in an in-vehicle device, and the TBOX is connected to a built-in battery VBAT of the vehicular telematics box, the VBAT supplies power to the TBOX through a power supply path, while the power supply path between the VBAT and the TBOX requires that a user manually control continuity of a switch unit. Alternatively, the switch unit is controlled by the TBOX, and when an original power source of the TBOX, a vehicular battery, stops supplying power to the TBOX, the TBOX controls the switch unit to be closed, so that the VBAT supplies power to the TBOX.

However, this causes a problem: if continuity in the power supply path is controlled by a user manually, it is inconvenient for use of the user, troubling user operations; and if the switch unit is controlled by the load, electrical continuity between the load and the switch unit needs to be maintained, resulting in electricity leakage and a waste of electrical energy.

For example, in the field of vehicular circuits, for safety and emergency considerations, a vehicular telematics box TBOX generally uses two power supply manners: a vehicular battery (B+) and a built-in battery (VBAT) of the vehicular telematics box. In normal cases, the B+ is a main power source of the TBOX. If the B+ is faulty, the VBAT automatically serves as a power source of the TBOX, to keep a TBOX system working normally. When one or both of the two power supply manners exist, the TBOX needs to be able to work normally and perform a power-off action.

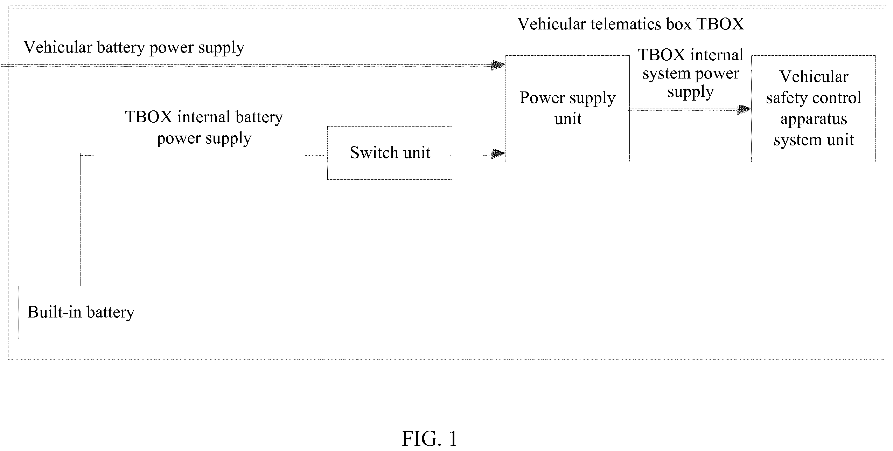

Referring to FIG 1, when the B+ does not supply power, the built-in battery of the vehicular telematics box is inserted into the TBOX for a first time, and the VBAT supplies power to the TBOX. For some devices, an internal system of the vehicular telematics box cannot automatically start up after the VBAT supplies power. For example, as shown in FIG 1, a switch unit is in an open state, and therefore the VBAT cannot supply power to the TBOX, and a TBOX system unit cannot be powered on. In this case, a user needs to manually control the switch unit to be closed, so that the VBAT supplies power to the TBOX. However, such settings cause trouble to operations of the user, and automatic power-on of the TBOX system cannot be implemented.

EP 2336843 A2 describes a compact information device and a shortened unlatch time are enabled in an information device that resumes supplying DC power to internal circuits as a result of a latch circuit unlatching when the supply of DC power to an internal circuit including a CPU is stopped. A printer has a CPU, tactile switch, smoothing capacitor, switch circuit, a switch control signal generator including a latch circuit, and a potential difference detection circuit. The latch circuit and potential difference detection circuit operate with voltage. The CPU outputs a start latch signal when the operating mode changes from a power supply mode to a power cutoff mode. When the tactile switch turns off, the potential difference detection circuit outputs a unlatch signal. When the unlatch signal is input, the latch circuit unlatches.

US 2015/0188347 A1 describes a battery management device configured to detect a present state of an electric device, and control supply of electric power from a battery device to a load of the electric device. The battery device includes a plurality of battery units that are electrically connected. The battery management device disables each of the battery units to stop supply of the electric power to the load when the electric device is detected to be in an abnormal state.

### SUMMARY

Embodiments of this application provide a control circuit and a circuit control method, to implement automatic power supply to a load device by a power source in an energy-saving manner.

According to a first aspect, an embodiment of this application provides a control circuit as set out in claim 1.

In this way, the switch unit can be automatically enabled when the power source supplies power, so that the power source automatically supplies power to the load device. The starting moment at which the load device outputs the second binary signal is earlier than the end moment at which the trigger unit outputs the first binary signal. Therefore, before the load device is energized, the control unit controls the switch unit to be closed under action of the first binary signal output by the trigger unit, and after the preset time, the trigger unit stops outputting the first binary signal. However, at this time, the control unit obtains the second binary signal output by the load device, and under action of the second binary signal, the control unit keeps outputting the switch control signal to the switch unit, so that the switch unit stays in a closed state, and the power source can continuously supply power to the load device. Therefore, rights of control over the switch unit are transferred from the trigger unit to the load device, so that the load device can control the path that supplies power to the load device.

With reference to the first aspect of the embodiments of this application, in a first implementation of the first aspect of the embodiments of this application, the control unit is further configured to: when the first binary signal and the second binary signal are not obtained, stop outputting the switch control signal to the switch unit; and the switch unit is further configured to: when the switch control signal is not obtained, break continuity in the path between the power source and the load device. In this way, the trigger unit and the load device can control the switch unit to be open, by stopping providing the first binary signal and the second binary signal to the control unit, so that the power source is not connected to the load device. This prevents electricity leakage of the power source and saves electrical energy of the power source.

With reference to the first implementation of the first aspect of the embodiments of this application, in a second implementation of the first aspect of the embodiments of this application, the first binary signal and the second binary signal are high level signals; the trigger unit is further configured to output a low level signal after the preset time; the control unit is further configured to obtain a low level signal of the load device after the load device is de-energized; and the control unit is further configured to: under action of the low level signal of the trigger unit and the low level signal of the load device, stop outputting the switch control signal to the switch unit. In this way, the trigger unit and the load device output high level signals to the control unit to control the switch unit to be closed, so that the power source supplies power to the load device; and the trigger unit and the load device output low level signals to the control unit to control the switch unit to be open, so that the power source is not connected to the load device. This can prevent electricity leakage of the power source, and the load device is in a high level state after being energized and a low level state after being de-energized. In this case, only a simple circuit connection is required to implement that the load device outputs a high level signal to the control unit after being energized and outputs a low level signal to the control unit after being de-energized, instead of complex software logic control. This simplifies a circuit and reduces costs.

With reference to the first aspect of the embodiments of this application, in a third implementation of the first aspect of the embodiments of this application, the first binary signal and the second binary signal are high level signals, the switch unit is a low level enabled switch, and the control unit includes a phase inverter. Therefore, the control unit is specifically configured to output a low level signal to the switch unit under action of the high level signal; and the switch unit is specifically configured to establish continuity in the path between the power source and the load device under action of the low level signal. In this way, the control unit performs, by using the phase inverter, phase inversion processing on the first binary signal and the second binary signal that are high level signals, to change them into low level signals, so as to control the switch unit that is a low level enabled switch.

With reference to the first aspect of the embodiments of this application, in a fourth implementation of the first aspect of the embodiments of this application, the switch unit is a high level enabled switch, and the control unit includes an electric signal excitation device. Therefore, the control unit is specifically configured to output a high level signal to the switch unit under action of the first binary signal and/or the second binary signal. The switch unit is specifically configured to establish continuity in the path between the power source and the load device under action of the high level signal output by the control unit. In this way, the control unit performs, by using the electric signal excitation device, processing on the first binary signal and the second binary signal that are high level signals, to change them into high level signals, so as to control the switch unit that is a high level enabled switch.

With reference to any one of the first aspect of the embodiments of this application or the first to the fourth implementations of the first aspect, in a fifth implementation of the first aspect of the embodiments of this application, the trigger unit is a differential circuit. Because the trigger unit is connected to the output end of the power source, that the trigger unit is a differential circuit can prevent electricity leakage of the power source and save electrical energy of the power source.

With reference to any one of the first aspect of the embodiments of this application or the first to the fourth implementations of the first aspect, in a sixth implementation of the first aspect of the embodiments of this application, the power source is a built-in battery of a vehicular telematics box, and the load device is the vehicular telematics box.

According to a second aspect, an embodiment of this application provides a circuit control method as set out in claim 7.

In this way, the switch unit can be automatically enabled when the power source supplies power, so that the power source automatically supplies power to the load device. The starting moment at which the load device outputs the second binary signal is earlier than the end moment at which the trigger unit outputs the first binary signal. Therefore, before the load device is energized, the control unit controls the switch unit to be closed under action of the first binary signal output by the trigger unit, and after the preset time, the trigger unit stops outputting the first binary signal. However, at this time, the control unit obtains the second binary signal output by the load device, and under action of the second binary signal, the control unit keeps outputting the switch control signal to the switch unit, so that the switch unit stays in a closed state, and the power source can continuously supply power to the load device. Therefore, rights of control over the switch unit are transferred from the trigger unit to the load device, so that the load device can control the path that supplies power to the load device.

With reference to the second aspect of the embodiments of this application, in a first implementation of the second aspect of the embodiments of this application, after the control unit outputs the switch control signal to the switch unit under action of the second binary signal, the method in this implementation further includes: when the first binary signal and the second binary signal are not obtained, stopping, by the control unit, outputting the switch control signal to the switch unit; and when the switch control signal is not obtained, breaking, by the switch unit, continuity in the path between the power source and the load device. In this way, the trigger unit and the load device can control the switch unit to be open, by stopping providing the first binary signal and the second binary signal to the control unit, so that the power source is not connected to the load device. This prevents electricity leakage of the power source and saves electrical energy of the power source.

With reference to the first implementation of the second aspect of the embodiments of this application, in a second implementation of the second aspect of the embodiments of this application, the first binary signal and the second binary signal are high level signals, and the method in this implementation further includes: outputting, by the trigger unit, a low level signal after the preset time; and obtaining, by the control unit, a low level signal of the load device after the load device is de-energized. The, when the first binary signal and the second binary signal are not obtained, stopping, by the control unit, outputting the switch control signal to the switch unit includes: under action of the low level signal of the trigger unit and the low level signal of the load device, stopping, by the control unit, outputting the switch control signal to the switch unit. In this way, the trigger unit and the load device output high level signals to the control unit to control the switch unit to be closed, so that the power source supplies power to the load device; and the trigger unit and the load device output low level signals to the control unit to control the switch unit to be open, so that the power source is not connected to the load device. This can prevent electricity leakage of the power source, and the load device is in a high level state after being energized and a low level state after being de-energized. In this case, only a simple circuit connection is required to implement that the load device outputs a high level signal to the control unit after being energized and outputs a low level signal to the control unit after being de-energized, instead of complex software logic control. This simplifies a circuit and reduces costs.

With reference to the second aspect of the embodiments of this application, in a third implementation of the second aspect of the embodiments of this application, the first binary signal is a high level signal, the switch unit is a low level enabled switch, and the control unit includes a phase inverter. The outputting, by the control unit, a switch control signal to the switch unit under action of the first binary signal includes: outputting, by the control unit, a low level signal to the switch unit under action of the high level signal.

Therefore, the establishing, by the switch unit, continuity in a path between the power source and a load device under action of the switch control signal includes: establishing, by the switch unit, continuity in the path between the power source and the load device under action of the low level signal. In this way, the control unit performs, by using the phase inverter, phase inversion processing on the first binary signal that is a high level signal, to change it into a low level signal, so as to control the switch unit that is a low level enabled switch.

With reference to the second aspect of the embodiments of this application, in a fourth implementation of the second aspect of the embodiments of this application, the second binary signal is a high level signal, the switch unit is a low level enabled switch, and the control unit includes a phase inverter. That the control unit outputs the switch control signal to the switch unit under action of the second binary signal includes: outputting, by the control unit, a low level signal to the switch unit under action of the high level signal. The method in this implementation further includes: establishing, by the switch unit, continuity in the path between the power source and the load device under action of the low level signal. In this way, the control unit performs, by using the phase inverter, phase inversion processing on the second binary signal that is a high level signal, to change it into a low level signal, so as to control the switch unit that is a low level enabled switch.

With reference to the second aspect of the embodiments of this application, in a fifth implementation of the second aspect of the embodiments of this application, the switch unit is a high level enabled switch, and the control unit includes an electric signal excitation device. The outputting, by the control unit, a switch control signal to the switch unit under action of the first binary signal includes: outputting, by the control unit, a high level signal to the switch unit under action of the first binary signal. The establishing, by the switch unit, continuity in a path between the power source and a load device under action of the switch control signal includes: establishing, by the switch unit, continuity in the path between the power source and the load device under action of the high level signal. That the control unit outputs the switch control signal to the switch unit under action of the second binary signal includes: outputting, by the control unit, a high level signal to the switch unit under action of the second binary signal. In this way, the control unit performs, by using the electric signal excitation device, processing on the first binary signal and the second binary signal that are high level signals, to change them into high level signals, so as to control the switch unit that is a high level enabled switch.

With reference to any one of the second aspect of the embodiments of this application or the first to the fifth implementations of the second aspect, in a sixth implementation of the second aspect of the embodiments of this application, the trigger unit is a differential circuit. Because the trigger unit is connected to an output end of the power source, that the trigger unit is a differential circuit can prevent electricity leakage of the power source and save electrical energy of the power source.

With reference to any one of the second aspect of the embodiments of this application or the first to the fifth implementations of the second aspect, in a seventh implementation of the second aspect of the embodiments of this application, the power source is a built-in battery of a vehicular telematics box, and the load device is the vehicular telematics box.

According to a third aspect, an embodiment of this application provides a control circuit, where the circuit includes a switch, a differential circuit, and a switch control circuit, where the differential circuit is connected to the switch control circuit, and the switch control circuit is connected to the switch.

The differential circuit is configured to: after obtaining an abrupt change of an electric signal output by a power source, output a first binary signal lasting for a preset time to the switch control circuit; the switch control circuit is configured to output a switch control signal to the switch under action of the first binary signal; the switch is configured to establish continuity in a path between the power source and a load device under action of the switch control signal, so that the power source supplies power to the load device, and the load device continuously outputs a second binary signal to the switch control circuit after being energized, where a starting moment at which the load device outputs the second binary signal is earlier than an end moment at which the differential circuit outputs the first binary signal; and the switch control circuit is further configured to output the switch control signal to the switch under action of the second binary signal.

In this way, the switch can be automatically enabled when the power source supplies power, so that the power source automatically supplies power to the load device. The starting moment at which the load device outputs the second binary signal is earlier than the end moment at which the differential circuit outputs the first binary signal. Therefore, before the load device is energized, the switch control circuit controls the switch to be closed under action of the first binary signal output by the differential circuit, and after the preset time, the differential circuit stops outputting the first binary signal. However, at this time, the switch control circuit obtains the second binary signal output by the load device, and under action of the second binary signal, the switch control circuit keeps outputting the switch control signal to the switch, so that the switch stays in a closed state, and the power source can continuously supply power to the load device. Therefore, rights of control over the switch are transferred from the differential circuit to the load device, so that the load device can control the path that supplies power to the load device.

With reference to the third aspect of the embodiments of this application, in a first implementation of the third aspect of the embodiments of this application, the switch control circuit is further configured to: when the first binary signal and the second binary signal are not obtained, stop outputting the switch control signal to the switch; and the switch is further configured to: when the switch control signal is not obtained, break continuity in the path between the power source and the load device. In this way, the differential circuit and the load device can control the switch to be open, by stopping providing the first binary signal and the second binary signal to the switch control circuit, so that the power source is not connected to the load device. This prevents electricity leakage of the power source and saves electrical energy of the power source.

With reference to the first implementation of the third aspect of the embodiments of this application, in a second implementation of the third aspect of the embodiments of this application, the first binary signal and the second binary signal are high level signals; the differential circuit is further configured to output a low level signal after the preset time; the switch control circuit is further configured to obtain a low level signal of the load device after the load device is de-energized; and the switch control circuit is further configured to: under action of the low level signal of the differential circuit and the low level signal of the load device, stop outputting the switch control signal to the switch. In this case, only a simple circuit connection is required to implement that the load device outputs a high level signal to the switch control circuit after being energized and outputs a low level signal to the switch control circuit after being de-energized, instead of complex software logic control. This simplifies a circuit and reduces costs.

With reference to the third aspect of the embodiments of this application, in a third implementation of the third aspect of the embodiments of this application, the first binary signal and the second binary signal are high level signals, the switch is a low level enabled switch, and the switch control circuit includes a phase inverter;
the phase inverter is configured to output a low level signal to the switch under action of the high level signal; and the switch is specifically configured to establish continuity in the path between the power source and the load device under action of the low level signal. In this way, phase inversion processing is performed, by using the phase inverter, on the first binary signal and the second binary signal that are high level signals, to change them into low level signals, so as to control the switch that is a low level enabled switch.

With reference to the third aspect of the embodiments of this application, in a fourth implementation of the third aspect of the embodiments of this application, the switch is a high level enabled switch, and the switch control circuit includes an electric signal excitation device.

The electric signal excitation device is configured to output a high level signal to the switch under action of the first binary signal and/or the second binary signal; and the switch is specifically configured to establish continuity in the path between the power source and the load device under action of the high level signal output by the switch control circuit. Processing is performed, by using the electric signal excitation device, on the first binary signal and the second binary signal that are high level signals, to change them into high level signals, so as to control the switch that is a high level enabled switch.

With reference to any one of the third aspect of the embodiments of this application or the first to the fourth implementations of the third aspect, in a fifth implementation of the third aspect of the embodiments of this application, the power source is a built-in battery of a vehicular telematics box, and the load device is the vehicular telematics box.

According to the technical solutions provided in the embodiments of this application, a control circuit includes a switch unit, a trigger unit, and a control unit, where the trigger unit is connected to the control unit, and the control unit is connected to the switch unit. The trigger unit is configured to: after obtaining an abrupt change of an electric signal output by a power source, output a first binary signal lasting for a preset time to the control unit. The control unit is configured to output a switch control signal to the switch unit under action of the first binary signal, and the switch unit is configured to establish continuity in a path between the power source and a load device under action of the switch control signal, so that the power source supplies power to the load device, and the load device continuously outputs a second binary signal to the control unit after being energized, where a starting moment at which the load device outputs the second binary signal is earlier than an end moment at which the trigger unit outputs the first binary signal. The control unit is further configured to output the switch control signal to the switch unit under action of the second binary signal. In this way, when the power source starts supplying power to the load device while the switch unit provided in the path between the power source and the load device is open, the trigger unit detects the abrupt change of the electric signal output by the power source, and therefore outputs the first binary signal to the control unit, so that the control unit outputs the switch control signal to the switch unit under action of the first binary signal, and the switch unit establishes continuity in the path between the power source and the load device under action of the switch control signal, for the power source to supply power to the load device. After being energized, the load device continuously outputs the second binary signal to the control unit, and the control unit outputs the switch control signal to the switch unit under action of the second binary signal, so that the switch unit maintains continuity in the path between the power source and the load device, for the power source to continue supplying power to the load device. In this way, the switch unit can be automatically enabled when the power source supplies power, so that the power source automatically supplies power to the load device. The starting moment at which the load device outputs the second binary signal is earlier than the end moment at which the trigger unit outputs the first binary signal. Therefore, before the load device is energized, the control unit controls the switch unit to be closed under action of the first binary signal output by the trigger unit, and after the preset time, the trigger unit stops outputting the first binary signal. However, at this time, the control unit obtains the second binary signal output by the load device, and under action of the second binary signal, the control unit keeps outputting the switch control signal to the switch unit, so that the switch unit stays in a closed state, and the power source can continuously supply power to the load device. Therefore, rights of control over the switch unit are transferred from the trigger unit to the load device, so that the load device can control the path that supplies power to the load device. In this way, the power source can automatically supply power to the load device, and because the trigger unit outputs the first binary signal to the control unit based on the obtained abrupt change of the electric signal output by the power source, to control the switch unit to be closed, in this case, controlling the switch unit to change from open to closed does not require that another device and the switch unit stay in an electrically-connected state. Therefore, electricity leakage is reduced, and the power source automatically supplies power to the load device in an energy-saving manner.

### BRIEF DESCRIPTION OF DRAWINGS

FIG 1 is a schematic structural diagram of a TBOX power supply control circuit according to an embodiment of this application;
FIG 2 is a schematic structural diagram of another control circuit according to an embodiment of this application;
FIG 3 is a schematic structural diagram of another control circuit according to an embodiment of this application;
FIG 4 is a schematic structural diagram of another control circuit according to an embodiment of this application;
FIG 5a is a schematic structural diagram of another control circuit according to an embodiment of this application;
FIG 5b is a specific schematic structural diagram of the control circuit in the embodiment shown in FIG 5a;
FIG 6 is a schematic structural diagram of another control circuit according to an embodiment of this application;
FIG 7a is a schematic structural diagram of another control circuit according to an embodiment of this application;
FIG 7b is a specific schematic structural diagram of the control circuit in the embodiment shown in FIG 7a;
FIG 8 is a schematic structural diagram of another control circuit according to an embodiment of this application;
FIG 9 is a method flowchart of a circuit control method according to an embodiment of this application; and
FIG 10 is a method flowchart of another circuit control method according to an embodiment of this application.

### DESCRIPTION OF EMBODIMENTS

The embodiments of this application provide a control circuit and a circuit control method, to implement automatic power supply to a load device by a power source, and automatic power supply to the load device by the power source is implemented in an energy-saving manner.

In the specification, claims, and accompanying drawings of this application, the terms "first", "second", "third", "fourth", and so on (if any) are intended to distinguish between similar objects but do not necessarily indicate a specific order or sequence. It should be understood that the data termed in such a way are interchangeable where appropriate so that the embodiments of the present invention described herein can be implemented in orders other than the orders illustrated or described herein. Moreover, the terms "include", "contain" and any other variants thereof mean to cover a non-exclusive inclusion. For example, a process, method, system, product, or device that includes a list of steps or units is not necessarily limited to those steps or units expressly listed, but may include other steps or units not expressly listed or inherent to such a process, method, product, or device.

In some control circuits, a power source supplies power to a load through a power supply path, and a switch unit is provided in the power supply path between the power source and the load to easily control continuity in the power supply path. If continuity of the switch unit is controlled by a user manually, inconvenience is caused to user operations. Alternatively, a power management chip is used to control the switch unit, but the management chip causes trouble of electricity leakage, and consequently electrical energy of the power source is wasted.

For example, in the field of vehicular circuits, for safety and emergency considerations, a vehicular telematics box TBOX generally uses two power supply manners: a vehicular battery (B+) and a built-in battery (VBAT) of the vehicular telematics box. In normal cases, the B+ is a main power source of the TBOX. If the B+ is faulty, the VBAT automatically serves as a power source of the TBOX, to keep a TBOX system working normally. When one or both of the two power supply manners exist, the TBOX needs to be able to work normally and perform a power-off action.

Referring to FIG 1, when the B+ does not supply power, the built-in battery of the vehicular telematics box is inserted into the TBOX for a first time, and the VBAT supplies power to the TBOX. For some devices, an internal system of the vehicular telematics box cannot automatically start up after the VBAT supplies power. For example, as shown in FIG 1, a switch unit is in an open state, and therefore the VBAT cannot supply power to the TBOX, and a TBOX system unit cannot be powered on. In this case, a user needs to manually control the switch unit to be closed, so that the VBAT supplies power to the TBOX. However, such settings cause trouble to operations of the user, and automatic power-on of the TBOX system cannot be implemented.

Therefore, a power management chip may be used to control a power control switch to be open or closed, to implement automatic power-on of the TBOX system. For example, when the B+ supplies power to the TBOX, the TBOX is electrically connected to the switch unit of the VBAT through a power management chip. Even if the VBAT does not supply power to the TBOX at this time, when the B+ changes from supplying power to the TBOX to supplying no power to the TBOX, the TBOX immediately controls the switch unit of the VBAT to be closed, so that the VBAT supplies power to the TBOX, and the TBOX stays in a working state. However, in such settings, because the power management chip is always connected to the VBAT, the power management chip entails electricity leakage and consumption of electrical energy of the VBAT.

In addition, the foregoing two manners cause other problems, for example, electricity leakage of a TBOX device. After the TBOX system is powered on, the TBOX system is automatically powered off if there is a de-energizing requirement. However, the TBOX system cannot shut down a power supply system. Therefore, the VBAT is always attached to the system. In other words, the VBAT stays connected to the TBOX device. As a result, a power source device (for example, a back-end power supply unit shown in FIG 1) attached to the built-in battery of the vehicular telematics box keeps leaking quiescent currents, and electricity of the VBAT is consumed. This is the case unless the user manually turns off the power control switch. Long-time quiescent current leakage of devices such as the power supply unit causes electricity of the VBAT to decrease gradually. When the VBAT is required to supply power to the TBOX system later, the TBOX system cannot start up because of an excessively small quantity of electricity of the VBAT.

For the foregoing problems, when the built-in battery of the vehicular telematics box supplies power alone, the control circuit and the circuit control method provided in the embodiments of this application can achieve the following if being used in a vehicular circuit:
1. After the built-in battery is inserted, the TBOX internal power supply unit can automatically start and supply power to the TBOX internal system unit, so that the system unit starts working.
2. After the TBOX internal system unit starts working, to perform a proactive power-off action, the TBOX can cut off a path through which the built-in battery supplies power to the back-end power supply unit, so as to prevent continuous electricity leakage of the built-in battery.

Certainly, the control circuit and the circuit control method provided in the embodiments of this application can also resolve other technical problems. For details, refer to corresponding descriptions below.

To make solutions provided in the embodiments of this application more comprehensible, some devices or technical terms are first described. For related devices and technical terms of the control circuit or the circuit control method provided in the embodiments of this application, refer to these descriptions. It can be understood that these descriptions are only for illustrative purposes.

Differential circuit: The differential circuit can convert a rectangular wave into a sharp pulse wave. An output waveform of the differential circuit reflects an abrupt change part of an input waveform, and there is output only at a moment when the input waveform shows an abrupt change. For a constant part of an input signal, the differential circuit does not have output. Specific circuit implementation of the differential circuit may be, for example, implementation by using a resistor R and a capacitor C, that is, an RC differential circuit. A width of a sharp pulse waveform output by the RC differential circuit is related to RC (that is, a time constant of the circuit). A smaller RC indicates a sharper pulse waveform. Otherwise, the waveform is wider.

Enable: Input and output of a control signal is referred to as enabling.

Phase inverter: The phase inverter can invert a phase of an input signal by 180 degrees, and may be, for example, a CMOS phase inverter. For example, a low level signal can be converted into a high level signal.

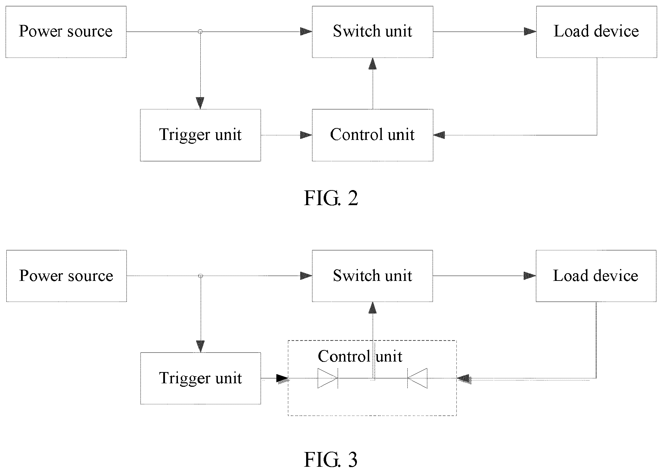

Referring to FIG 2, FIG 2 is a schematic structural diagram of a control circuit according to an embodiment of this application. The control circuit includes a switch unit, a trigger unit, and a control unit, where the trigger unit is connected to the control unit, and the control unit is connected to the switch unit.

The trigger unit is configured to: after obtaining an abrupt change of an electric signal output by a power source, output a first binary signal lasting for a preset time to the control unit. The control unit is configured to output a switch control signal to the switch unit under action of the first binary signal. The switch unit is configured to establish continuity in a path between the power source and a load device under action of the switch control signal, so that the power source supplies power to the load device, and the load device continuously outputs a second binary signal to the control unit after being energized, where a starting moment at which the load device outputs the second binary signal is earlier than an end moment at which the trigger unit stops outputting the first binary signal. The control unit is further configured to output the switch control signal to the switch unit under action of the second binary signal, so that the switch unit continues being closed under action of the switch control signal.

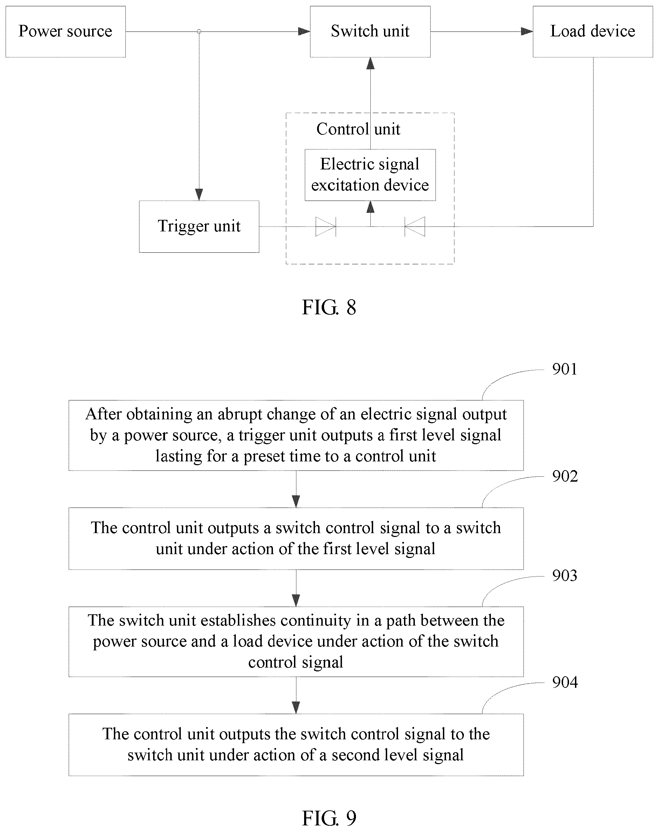

For a specific execution procedure of the control circuit in this embodiment of this application, refer to descriptions of an embodiment of a circuit control method shown in FIG 9.

In this way, when the power source starts supplying power to the load device while the switch unit provided in the path between the power source and the load device is open, the trigger unit detects the abrupt change of the electric signal output by the power source, and therefore outputs the first binary signal to the control unit, so that the control unit outputs the switch control signal to the switch unit under action of the first binary signal, and the switch unit establishes continuity in the path between the power source and the load device under action of the switch control signal, for the power source to supply power to the load device. After being energized, the load device continuously outputs the second binary signal to the control unit, and the control unit outputs the switch control signal to the switch unit under action of the second binary signal, so that the switch unit maintains continuity in the path between the power source and the load device, for the power source to continue supplying power to the load device. In this way, the switch unit can be automatically enabled when the power source supplies power, so that the power source automatically supplies power to the load device. The starting moment at which the load device outputs the second binary signal is earlier than the end moment at which the trigger unit outputs the first binary signal. Therefore, before the load device is energized, the control unit controls the switch unit to be closed under action of the first binary signal output by the trigger unit, and after the preset time, the trigger unit stops outputting the first binary signal. However, at this time, the control unit obtains the second binary signal output by the load device, and under action of the second binary signal, the control unit keeps outputting the switch control signal to the switch unit, so that the switch unit stays in a closed state, and the power source can continuously supply power to the load device. Therefore, rights of control over the switch unit are transferred from the trigger unit to the load device, so that the load device can control the path that supplies power to the load device. In this way, the power source can automatically supply power to the load device, and because the trigger unit outputs the first binary signal to the control unit based on the obtained abrupt change of the electric signal output by the power source, to control the switch unit to be closed, in this case, controlling the switch unit to change from open to closed does not require that another device and the switch unit stay in an electrically-connected state. Therefore, electricity leakage is reduced, and the power source automatically supplies power to the load device in an energy-saving manner.

The control circuit in this embodiment of this application uses a simple design of circuit elements. When the power source starts supplying power, the load device can obtain the power supplied by the power source, so as to complete an energizing operation. In addition, after being energized, the load device can easily obtain rights of control over the power supply path of the power source.

For example, the load device can control the switch unit to be open only after the load device stops outputting the second binary signal to the control unit, so as to break continuity in the path between the power source and the load device. A specific solution is as follows:

The control unit is further configured to: when the first binary signal and the second binary signal are not obtained, stop outputting the switch control signal to the switch unit; and the switch unit is further configured to: when the switch control signal is not obtained, break continuity in the path between the power source and the load device.

To be specific, after the preset time, the trigger unit no longer outputs the first binary signal lasting for the preset time to the control unit; but because the load device continuously outputs the second binary signal to the control unit after being energized and the starting moment at which the load device outputs the second binary signal is earlier than the end moment at which the trigger unit outputs the first binary signal, the control unit outputs the switch control signal to the switch unit under action of the second binary signal, to control the switch unit to stay in a closed state. In this case, rights of control over the switch unit belong to the load device. If the load device has a de-energizing requirement, the load device stops outputting the second binary signal to the control unit. In this case, the control unit fails to obtain the first binary signal and the second binary signal, and therefore stops outputting the switch control signal to the switch unit. When the switch unit fails to obtain the switch control signal, the switch unit breaks continuity in the path between the power source and the load device, so that the path between the power source and the load device is in an open state, and the load device is no longer connected to the power source. This prevents quiescent leakage caused because the power source is attached to the load device and saves electrical energy of the power source. This embodiment of this application is particularly applicable to specific scenarios in which the power source is a battery. Because the battery stores limited electrical energy, excessive electricity leakage affects subsequent power supply to the load device by the battery.

In this way, after the load device is de-energized, the path between the power source and the load device is automatically cut off without dedicated software control, so as to resolve the problem of electricity leakage of the power source. In addition, when the power source supplies power to the load device again, the foregoing power supply procedure can be repeated without a special initialization process.

It can be understood that the control circuit in this embodiment of this application may have a plurality of specific implementations.

The function of the switch unit is to control continuity in the path between the power source and the load device. The switch unit is in a closed state when obtaining the switch control signal, so as to establish continuity in the path between the power source and the load device. The switch unit is in an open state when the switch unit fails to obtain switch control information, so as to break continuity in the path between the power source and the load device. The switch unit includes but is not limited to a low level enabled switch or a high level enabled switch, and may be specifically a switch such as a MOS (metal-oxide-semiconductor, metal-oxide-semiconductor) transistor or a transistor.

The function of the trigger unit is to output the first binary signal when detecting the abrupt change of the electric signal of the power source. A specific form of the trigger unit includes but is not limited to a differential circuit or a control chip.

The control unit may perform "OR" processing on the first binary signal output by the trigger unit and the second binary signal output by the load device. To be specific, the control unit may output the switch control signal to the switch unit when obtaining the first binary signal and/or the second binary signal. In some embodiments, the control unit may further perform signal processing, and therefore for different types of switch units, different control units may be designed to output signals capable of enabling the switch units.

The first binary signal and the second binary signal may be a same level signal or may be different level signals. The switch control signal may directly use the first binary signal and/or the second binary signal, or may be obtained after processing is performed on the first binary signal and the second binary signal.

There may be a plurality of specific forms for the switch unit, the control unit, the first binary signal, the second binary signal, and the switch control signal. For example, FIG 3 is a schematic structural diagram of a control circuit according to an embodiment of this application. In FIG 3, the control unit includes two diodes. One diode allows the first binary signal to be output to the switch unit from the trigger unit, but prevents the second binary signal from being output to the trigger unit from the load device. The other diode allows the second binary signal to be output to the switch unit from the load device, but prevents the first binary signal from being output to the load device from the trigger unit. It can be learned that the control unit can prevent the first binary signal from being output to the load device and prevent the second binary signal from being output to the power source. The first binary signal or the second binary signal or a signal resulting from superimposition of the first binary signal and the second binary signal may be used as the switch control signal.

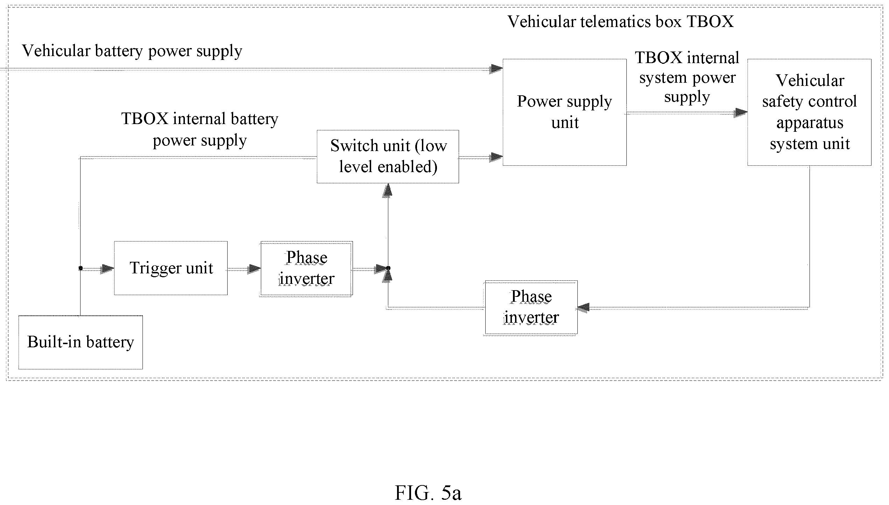

Alternatively, for specific implementation of the switch unit, the control unit, the first binary signal, the second binary signal, and the switch control signal, reference may be made to embodiments shown in FIG 5a, FIG 5b, FIG 6, FIG 7a, FIG 7b, and FIG 8, and this embodiment of this application is not specifically limited in this sense.

The power source may be, for example, a battery or an apparatus that obtains electrical energy from a grid. The power source is configured to provide electrical energy for the load device.

The load device may be a plurality of specific devices depending on requirements, for example, a TBOX or a control device with a preset function. This embodiment of this application is not specifically limited in this sense, provided that the load device can output the second binary signal and that the starting moment at which the load device outputs the second binary signal is earlier than the end moment at which the trigger unit outputs the first binary signal.

The control circuit in this embodiment of this application may be used in a plurality of specific circuits, for example, a vehicular circuit or an automatic control circuit. This embodiment of this application is not specifically limited in this sense.

To provide more intuitive description of the control circuit in this embodiment of this application, the following provides detailed descriptions by using a scenario in which the control circuit in this embodiment of this application is applied to one type of circuit among those used for vehicular circuits. In a specific example, the trigger unit is a differential circuit, the power source is a built-in battery of a vehicular telematics box, namely, a VBAT, which is referred to as a built-in battery for short in this embodiment of this application, and the load device is the vehicular telematics box TBOX.

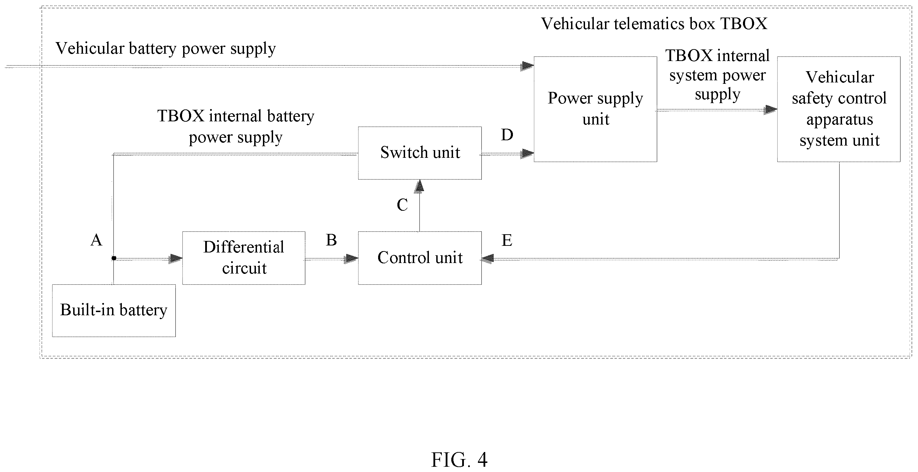

Specific descriptions are as follows:
Referring to FIG. 4, FIG. 4 is a schematic structural diagram of a control circuit according to an embodiment of this application. The control circuit includes a switch unit, a differential circuit, and a control unit, where the differential circuit is connected to the control unit, and the control unit is connected to the switch unit. A built-in battery is connected to one end of the switch unit, and the other end of the switch unit is connected to a TBOX. Therefore, the switch unit can control continuity in the path between the built-in battery and the TBOX connected/disconnected. The TBOX includes two parts: a power supply unit and a vehicular safety control apparatus system unit (referred to as a system unit for short). The power supply unit is connected to the switch unit and is also connected to a vehicular battery. After obtaining electrical energy, the power supply unit can supply power to the system unit. The TBOX is also connected to the control unit, and specifically, the system unit is connected to the control unit. In some embodiments, the control circuit in this embodiment of this application may be integrated into the TBOX, and the control circuit is an internal circuit of the TBOX.

An output end of the built-in battery is connected to the differential circuit. The differential circuit is configured to: after obtaining an abrupt change of an electric signal output by the built-in battery, output a first binary signal lasting for a preset time to the control unit. The control unit is configured to output a switch control signal to the switch unit under action of the first binary signal. The switch unit is configured to establish continuity in a path between the built-in battery and the load device under action of the switch control signal, so that the built-in battery supplies power to the TBOX. After being energized, the TBOX continuously outputs a second binary signal to the control unit. A starting moment at which the TBOX outputs the second binary signal is earlier than an end moment at which the trigger unit outputs the first binary signal. The control unit is further configured to output the switch control signal to the switch unit under action of the second binary signal.

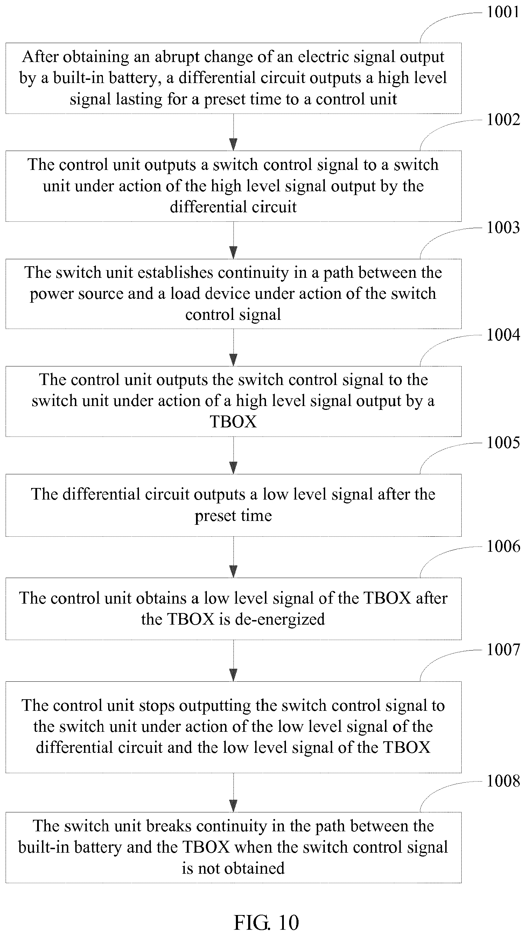

For an execution procedure of the control circuit in this embodiment of this application, refer to a schematic method flowchart of a circuit control method shown in FIG. 10. For implementation details, refer to descriptions of an embodiment shown in FIG. 10. For example, for an energizing process of the TBOX, refer to detailed descriptions of steps 1001 to 1004 in the embodiment shown in FIG. 10.

For example, when the vehicular battery is faulty, the vehicular battery does not supply power to the TBOX. To continue working or implement power-on, the TBOX needs to use electrical energy of the built-in battery.

The following description uses an example in which the electrical energy of the built-in battery is used to implement power-on.

Referring to FIG. 4, the vehicular battery does not supply power to the TBOX, that is, the vehicular battery stops supplying power, and the backup built-in battery of the TBOX is inserted, so that the control circuit obtains electrical energy of the built-in battery. Specifically, a user may insert the built-in battery in a vehicular system, or when the vehicular battery is faulty, the vehicular system automatically controls the built-in battery to enter a service state. After the built-in battery is inserted, an electric signal output by the built-in battery changes from zero to a preset voltage, so that a path at A first generates an abruptly changing electric signal, that is, a rectangular wave, and the differential circuit connected to the built-in battery detects the abruptly changing electric signal, and therefore generates a high level signal lasting for the preset time and outputs the high level signal to the control unit. The preset time may be determined by a device parameter of the differential circuit. To be specific, insertion of the built-in battery may trigger a period of high level in the differential circuit; after the rectangular wave, the electric signal output by the built-in battery is a constant electric signal and the differential circuit detects no abrupt change in the electric signal, and the high level signal output by the differential circuit gradually drops to low level. After the control unit obtains, through the path at B, the high level signal output by the differential circuit, the control unit performs processing on the high level signal, to output a switch control signal to the switch unit, so as to control the switch unit. To be specific, the control unit outputs the switch control signal to the switch unit under action of the high level signal output by the differential circuit. After obtaining the switch control signal through a path at C, the switch unit changes from an original open state to a closed state under action of the switch control signal, so as to establish continuity in the path between the built-in battery and the power supply unit, and the built-in battery supplies power to the power supply unit. The power supply unit obtains, through the path at D, electrical energy output by the built-in battery. The power supply unit starts working, to supply power to the vehicular safety control apparatus system unit, so that the system unit is powered on. After the system unit is powered on, the system unit rapidly outputs a high level signal to the control unit, provided that a starting moment at which the system unit outputs the high level signal is earlier than an end moment at which the differential circuit outputs the high level signal. Specifically, this may be implemented by adjusting the preset time and a circuit of the system unit. After the high level signal output by the system unit is processed by the control unit through the path at E, the control unit outputs a switch control signal to the switch unit, to be specific, outputs the switch control signal to the switch unit through the path at C. At this time, the control unit obtains, during the preset time, both the high level signal output by the system unit and the high level signal output by the differential circuit, and outputs the switch control signal to the switch unit under action of the two high level signals, so that the switch unit is in a closed state. To be specific, the control unit first obtains the high level signal output by the differential circuit, and outputs a switch control signal to the switch unit based on the high level signal output by the differential circuit; then, during the preset time, the control unit further obtains the high level signal output by the system unit; and at this time, the control unit outputs the switch control signal to the switch unit based on the high level signal output by the system unit and the high level signal output by the differential circuit. At B, the high level signal generated by the differential circuit starts declining after reaching battery level. To be specific, the high level signal output by the differential circuit becomes a low level signal after lasting for the preset time, and the control unit cannot generate a switch control signal based on the low level signal. Therefore, after the preset time, the differential circuit loses enabling control over the switch unit. At this time, because the system unit keeps outputting the high level signal to the control unit, the high level signal at E can take over control over the switch unit. In other words, enabling control over the switch unit is first executed by the differential circuit, and then jointly executed by the differential circuit and the system unit, and finally, enabling control over the switch unit is executed by the system unit alone. Now, an energizing procedure of the system unit is completed, and the system unit (that is, a load device) also obtains rights of control over the switch unit.

The control unit includes a function of processing the obtained high level signal. That "the control unit outputs the switch control signal to the switch unit under action of the high level signal" may be, for example, "the control unit converts the high level signal into a low level signal and outputs the low level signal to the switch unit". Functions of the control unit further include: when the differential circuit controls the switch unit to be enabled, the high level signal output by the system unit can also control the switch unit to be enabled, so that after the high level signal of the differential circuit disappears, the system unit can continue controlling the switch unit to be enabled, to make the switch unit closed.

By performing the foregoing procedure, the TBOX, used as a load device, in this embodiment of this application completes energizing and has rights of control over the switch unit. That is, the TBOX can control continuity of the switch unit.

In some embodiments of this application, the control unit is further configured to: when the first binary signal and the second binary signal are not obtained, stop outputting the switch control signal to the switch unit; and the switch unit is further configured to: when the switch control signal is not obtained, break continuity in the path between the power source and the load device.

After the preset time counted from a moment at which the trigger unit sends the first binary signal, the trigger unit does not output the first binary signal to the control unit, and the control unit obtains only the second binary signal output by the load device. Therefore, if the load device stops outputting the second binary signal to the control unit, the control unit cannot obtain the first binary signal and the second binary signal and stops outputting the switch control signal to the switch unit, to make the switch unit open. To be specific, the load device controls continuity of the switch unit by outputting or not outputting the second binary signal, so that the load device has more rights of control, to implement that the switch unit is open as required by the load device. In addition, after the load device stops outputting the second binary signal, the switch unit is open. At this time, the continuity in the path between the power source and the load device is not maintained, and the power source is not attached to the load device. Therefore, the load device cannot cause electricity leakage of the power source, thereby saving electrical energy of the power source. If the power source is a battery, this prevents depletion of electrical energy from the battery because of electricity leakage.

In some embodiments of this application, the load device may stop outputting the second binary signal to the control unit before being de-energized, and therefore when the switch unit is open, the load device obtains no electrical energy of the power source and naturally a de-energizing operation is implemented. In this way, the load device can be de-energized quickly.

In some embodiments of this application, the load device may perform a de-energizing operation, for example, a power-off operation, before stopping outputting the second binary signal to the control unit, and does not output the second binary signal to the control unit after de-energizing is completed. This can also implement control over the switch unit.

In some embodiments of this application, a voltage difference obtained after energizing/de-energizing of the load device is used to control output of a level signal. To be specific, after being energized, the load device has a voltage, and the load device outputs a high level signal to the control unit; and after being de-energized, the load device has no voltage, and therefore a level signal obtained from the load device by the control unit is a low level signal. Correspondingly, it is configured that the control unit outputs the switch control signal to the switch unit after obtaining the high level signal and the control unit does not output the switch control signal to the switch unit when obtaining the low level signal. Such settings can implement control over the switch unit by the load device with a simple circuit design instead of software logic control, thereby reducing complexity of circuit design and reducing circuit costs.

Specifically, the first binary signal and the second binary signal are high level signals, and the trigger unit is further configured to output a low level signal after the preset time, and the control unit is further configured to obtain the low level signal of the load device after the load device is de-energized. The control unit is further configured to: under action of the low level signal of the trigger unit and the low level signal of the load device, stop outputting the switching control signal to the switch unit. To be specific, the control unit outputs the switch control signal to the switch unit under action of the high level signal, so that the switch unit is closed; after the preset time, the trigger unit outputs the low level signal to the control unit, for example, a signal whose voltage is zero, and the load device outputs the high level signal, and therefore continuity of the switch unit is controlled by the load device. After the load device is de-energized, a level signal output by the load device is low level, for example, a level signal whose voltage is zero, meaning that the load device outputs no voltage to the control unit. A level signal obtained by the control unit from the load device is a low level signal, and a signal outputted by the trigger unit is also a low level signal. Therefore, the control unit does not output the switch control signal to the switch unit, and the switch unit changes from closed to open. To be specific, a result of de-energizing the load device is that the switch unit is controlled to be open. The load device outputs no voltage or current after being de-energized, and even if electricity leakage occurs, a leak voltage or current is relatively small. Therefore, voltage or power output by the load device to the control unit after the load device is energized is greater than voltage or power output by the load device to the control unit after the load device is de-energized. To be specific, energizing/de-energizing of the load device can implement output of a high level signal or a low level signal to the control unit. With such circuit settings, the load device does not need to set complex dedicated software logic control for controlling continuity of the switch unit, so as to reduce design difficulty and costs of the control circuit in this embodiment of this application.

After the control circuit in this application is used for a circuit in the TBOX scenario, for specific execution steps of a de-energizing procedure, reference may be made to detailed descriptions of steps 1006 to 1008 in the embodiment shown in FIG. 10.

The following describes in detail the de-energizing procedure of the load device by using the TBOX scenario.

Power-off and de-energizing procedure: Referring to FIG. 4, when the TBOX is de-energized, the system unit is powered off, and therefore the path at E is automatically in a low level state after the system unit is powered off. After the system is completely changed into low level, a level signal obtained by the control unit from the system unit is a low level signal, and at this time, high level output by the differential circuit is converted into a low level signal after the preset time, and without action of the high level signal, the control unit does not output the switch control signal to the switch unit, so that the switch unit changes from closed to open. In this case, the path between the built-in battery and the power supply unit is in an open state, and the built-in battery no longer supplies power to the power supply unit, and the de-energizing procedure ends. At this time, no device in the entire TBOX consumes electricity of the built-in battery, avoiding electricity leakage of the built-in battery and saving electrical energy of the built-in battery. In addition, there is no need to set software logic control on the system unit to implement control over the switch unit, and only a simple circuit connection is required to implement output of the high level signal and the low level signal to the control unit by the system unit. Such settings make a simple circuit design and reduce circuit costs.

In this way, according to the control circuit in this embodiment of this application, after the built-in battery of the TBOX is inserted to supply power, the TBOX system can take over control over continuity of the path of the built-in battery, and after the TBOX system is de-energized, the path between the built-in battery and the back-end power supply unit may be cut off, thereby resolving a problem of electricity leakage of the built-in battery.

The control unit and the switch unit in this embodiment of this application have a plurality of implementations, for example, the implementation of the control circuit shown in FIG. 3. To be specific, the control unit includes two diodes, and the switch control signal output by the control unit to the switch unit may be the first binary signal, or the second binary signal, or a signal resulting from superimposition of the first binary signal and the second binary signal. For specific details of this implementation, refer to the foregoing corresponding descriptions.

In some embodiments of this application, the first binary signal and the second binary signal are high level signals, the switch unit is a low level enabled switch, the control unit includes a phase inverter, and the phase inverter has a function of converting high level into low level. In this case, the control unit is specifically configured to output a low level signal to the switch unit under action of the high level signal. To be specific, when the control unit obtains a high level signal that is the first binary signal and/or a high level signal that is the second binary signal, the phase inverter of the control unit may convert the two high level signals into low level signals, so that the control unit uses the low level signals obtained through conversion as switch control signals and outputs the switch control signals to the switch unit. Correspondingly, the switch unit is specifically configured to establish continuity in the path between the power source and the load device under action of the low level signals.

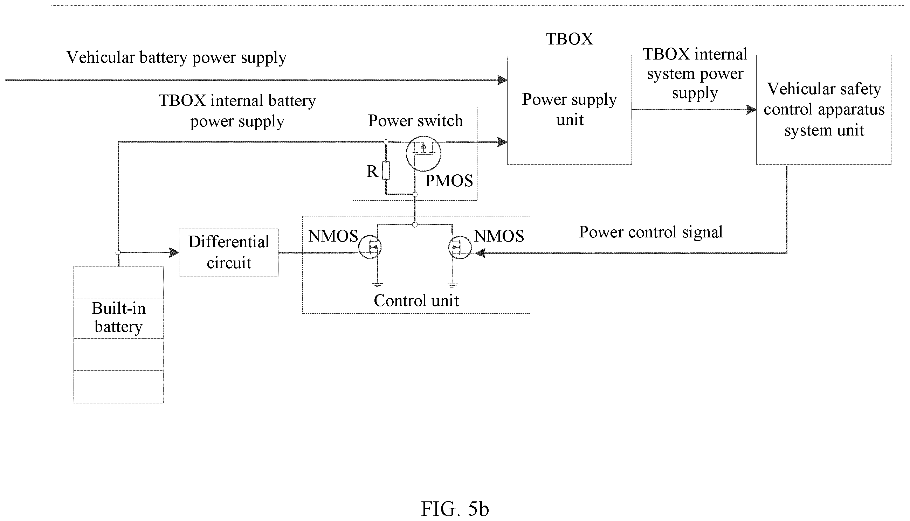

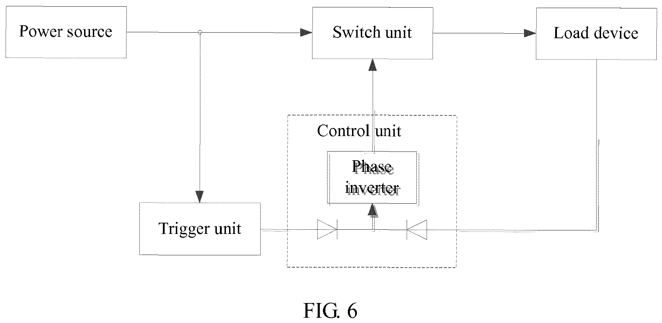

In the embodiment in which the control unit includes a phase inverter, a specific implementing solution may be shown in FIG. 5a, FIG. 5b, and FIG. 6.

Referring to FIG 5a, the control unit includes two phase inverters. One phase inverter is connected to the trigger unit, converts a high level signal output by the trigger unit into a low level signal, and outputs the low level signal to the switch unit. The other phase inverter is connected to the load device (for example, the system unit), converts a high level signal output by the load device into a low level signal, and outputs the low level signal to the switch unit. The switch unit is a low level enabled switch. After obtaining the low level signal, the switch unit is in a closed state under action of the low level signal. If the two phase inverters obtain no high level signal, the phase inverters do not output the low level signals to the switch unit, and therefore the switch unit is in an open state. Such settings of two phase inverters can satisfy the requirement for controlling the low level enabled switch, preventing high level output by the trigger unit from flowing into the load device, and preventing the high level signal output by the load device from flowing into the differential circuit.

A circuit structure shown in FIG. 5b is a specific implementation of the control circuit shown in FIG. 5a. As shown in FIG. 5b, the phase inverters are NMOSes, and the switch unit includes a PMOS and a resistor. For a specific connection between the devices, refer to the structure shown in FIG. 5b.

Referring to FIG. 6, the control unit includes a phase inverter and two diodes. One of the diodes is connected to the trigger unit, so that the high level signal output by the trigger unit flows into the phase inverter and prevents the high level signal output by the load device from flowing into the trigger unit. The other diode is connected to the load device, so that the high level signal output by the load device is output to the phase inverter and the high level output by the trigger unit is prevented from flowing into the load device. After obtaining a high level signal input by one diode or simultaneously obtaining high level signals input by the two diodes, the phase inverter converts the high level signal into a low level signal, uses the low level signal as a switch control signal, and inputs the switch control signal into the switch unit, so that the switch unit is closed under action of the low level signal. For types of the devices in FIG. 6, refer to FIG. 5b. To be specific, in FIG. 6, the phase inverter may be an NMOS, and the switch unit may include a PMOS and a resistor.

In some embodiments of this application, the switch unit is a high level enabled switch, and the control unit includes an electric signal excitation device. To drive the high level enabled switch, when the high level signals output by the trigger unit and the load device cannot satisfy the requirement for controlling the switch unit, the electric signal excitation device may be used to raise voltages of the first binary signal and the second binary signal, to obtain the switch control signal so as to control the switch unit. For example, if the switch unit is a high level enabled switch (for example, an NMOS), for effective enabling, an excited signal is required to be a control signal whose level is higher than output level of the VBAT. The high level signal of the differential circuit can reach the VBAT level at maximum, which cannot enable the switch unit. Therefore, the electric signal excitation device needs to be used to process the signal.

In this case, the control unit is specifically configured to output the high level signal to the switch unit under action of the first binary signal and/or the second binary signal. The switch unit is specifically configured to establish continuity in the path between the power source and the load device under action of the high level signal output by the control unit. In this way, after obtaining the first binary signal and/or the second binary signal, the control unit can raise level of the first binary signal and/or the second binary signal by using the electric signal excitation device, and use a high level signal resulting from level rise as the switch control signal and input the switch control signal into the high level enabled switch unit, to drive the switch unit to be closed.

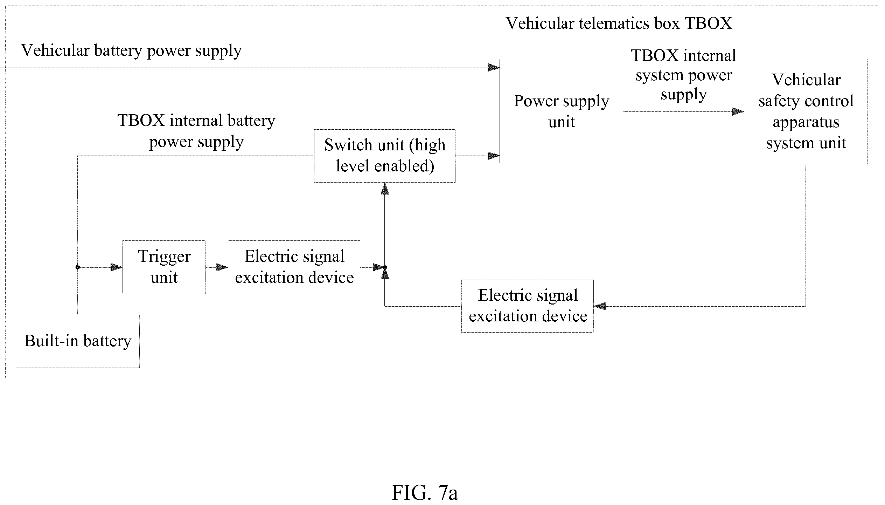

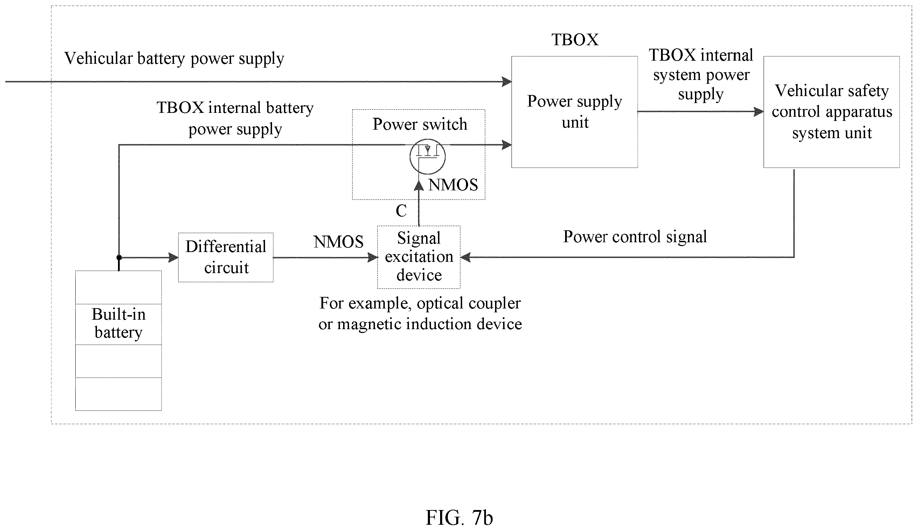

For the embodiment in which the control unit includes an electric signal excitation device, a specific implementing solution may be shown in FIG. 7a, FIG. 7b, and FIG. 8.

Referring to FIG. 7a, the control unit includes two electric signal excitation devices. One of the electric signal excitation devices is connected to the trigger unit to raise level of the first binary signal output by the trigger unit. This electric signal excitation device uses the level-raised first binary signal as the switch control signal, and inputs the switch control signal into the switch unit, to drive the high level enabled switch unit to be closed. In addition, this electric signal excitation device can prevent the second binary signal output by the load device from being input into the trigger unit. The other electric signal excitation device is connected to the load device to raise level of the second binary signal output by the load device. This electric signal excitation device uses the level-raised second binary signal as the switch control signal, and inputs the switch control signal into the switch unit, so that the switch unit is closed under action of the switch control signal. In addition, this electric signal excitation device prevents the first binary signal output by the trigger unit from being input into the load device. After the two electric signal excitation devices fail to obtain the first binary signal or the second binary signal, the devices do not output the switch control signal to the switch unit, so that the switch unit fails to obtain the switch control signal, and therefore the switch unit is open.

A circuit structure shown in FIG. 7b is a specific implementation of the control circuit in FIG. 7a. As shown in FIG. 7b, the switch unit is an NMOS, and the electric signal excitation device may be, for example, an optical coupling device or a magnetic induction device.

In some embodiments, the control unit may include only one electric signal excitation device. For example, as shown in FIG. 8, the control unit further includes two diodes. For functions of the two diodes, refer to corresponding descriptions of the diodes in the embodiment shown in FIG. 6. The electric signal excitation device may raise level of the first binary signal and/or the second binary signal, use a level signal resulting from level rise as the switch control signal, and input the switch control signal into the switch unit, so that the switch unit is closed when obtaining the switch control signal.

By using the control circuit in this embodiment of this application in the TBOX circuit scenario, after the built-in battery of the TBOX circuit is inserted, the system can be automatically powered on. In addition, after the TBOX is powered on, the TBOX has rights of proactive control over a power supply path of the built-in battery. After the TBOX is powered off, a connection between the built-in battery and a back-end device, for example, the power supply unit, may be cut off, so as to resolve the problem of continuous electricity leakage of the built-in battery. In addition, because a circuit architecture design used by the control circuit in this embodiment of this application may be built by using simple detached electronic components, no complex dedicated software logic control is required. Therefore, development is not difficult and costs are low.

It can be understood that the foregoing descriptions of the control unit and the switch unit are examples, and the control circuit in this embodiment of this application may alternatively include other forms of control units and switch units.

It can be understood that the trigger unit may be a differential circuit, or an implementation such as a control chip. This embodiment of this application is not specifically limited in this sense. If the specific form of a differential circuit is used, an abrupt change of a signal output by the power source can be detected, and the differential circuit can also prevent the power source from leaking electricity after being connected to the power source.

It can be understood that the TBOX in the foregoing embodiment is only one specific implementation of the load device, and the load device in this embodiment of this application may alternatively be another type of device, for example, a motor or a control device. The power source may be the foregoing built-in battery, or may be, for example, an apparatus obtaining electrical energy from a grid or a grid power source.

It can be understood that the built-in battery includes but is not limited to the following types: a lithium battery, a nickel-metal hydride battery, and a lead crystal battery.

It can be understood that units and modules of the control circuit in this embodiment of this application may be configured separately, or may be integrated into each other. For example, the switch unit and the control unit are integrated into one device. This embodiment of this application is not specifically limited in this sense.

FIG. 9 is a method flowchart of a circuit control method according to an embodiment of this application. The circuit control method may be applied to the control circuit in the foregoing embodiments.

The control circuit to which the circuit control method is applied includes a switch unit, a trigger unit, and a control unit, where the trigger unit is connected to the control unit, and the control unit is connected to the switch unit. For specific descriptions of these units and devices as well as a power source and a load device, refer to corresponding descriptions of the control circuit in the embodiments shown in FIG. 2 to FIG. 8. Details are not repeated herein.

The circuit control method in this embodiment of this application includes the following steps.

Step 901: After obtaining an abrupt change of an electric signal output by the power source, the trigger unit outputs a first binary signal lasting for a preset time to the control unit.

The preset time may be adjusted based on a component parameter of the trigger device. The abrupt change of the electric signal output by the power source includes a rectangular wave indicating that the electric signal abruptly changes from zero to a preset voltage when the power source starts supplying power.

Step 902: The control unit outputs a switch control signal to the switch unit under action of the first binary signal.

To be specific, the control unit outputs the switch control signal to the switch unit only when obtaining the first binary signal, so as to control the switch unit. For example, the control unit converts the first binary signal into the switch control signal.

Step 903: The switch unit establishes continuity in a path between the power source and the load device under action of the switch control signal.

After continuity is established in the path between the power source and the load device, the power source can supply power to the load device. After being energized, the load device continuously outputs a second binary signal to the control unit. A starting moment at which the load device outputs the second binary signal is earlier than an end moment at which the trigger unit outputs the first binary signal.

Step 904: The control unit outputs the switch control signal to the switch unit under action of a second binary signal.

When obtaining the second binary signal, the control unit outputs the switch control signal to the switch unit under action of the second binary signal, so that the switch unit is in a closed state under action of the switch control signal, to establish continuity in the path between the power source and the load device. For example, the control unit converts the second binary signal into the switch control signal.

In this way, the control unit outputs the switch control signal to the switch unit when obtaining the first binary signal or the second binary signal, or when simultaneously obtaining the first binary signal and the second binary signal, so that the trigger unit and the load device can control continuity of the switch unit.

In some embodiments of this application, the circuit control method further includes a de-energizing procedure of the load device. To be specific, after the control unit outputs the switch control signal to the switch unit under action of the second binary signal, the method in this embodiment of this application further includes: When the first binary signal and the second binary signal are not obtained, the control unit stops outputting the switch control signal to the switch unit; and when the switch control signal is not obtained, the switch unit breaks continuity in the path between the power source and the load device.

Because the first binary signal output by the trigger unit lasts only for the preset time, after the preset time, the control unit obtains only the second binary signal, and outputs the switch control signal to the switch unit under action of the second binary signal, to control the switch unit to be closed. When the load device stops outputting the second binary signal to the control unit, because the trigger unit has stopped outputting the first binary signal, the control unit fails to obtain the first binary signal and the second binary signal and stops outputting the switch control signal to the switch unit. The switch unit is open when the switch control signal is not obtained. In this way, the load device can proactively control the path between the power source and the load device to be open-circuited.

To sum up, when the power source starts supplying power to the load device while the switch unit provided in the path between the power source and the load device is open, the trigger unit detects the abrupt change of the electric signal output by the power source, and therefore outputs the first binary signal to the control unit, so that the control unit outputs the switch control signal to the switch unit under action of the first binary signal, and the switch unit establishes continuity in the path between the power source and the load device under action of the switch control signal, for the power source to supply power to the load device. After being energized, the load device continuously outputs the second binary signal to the control unit, and the control unit outputs the switch control signal to the switch unit under action of the second binary signal, so that the switch unit maintains continuity in the path between the power source and the load device, for the power source to continue supplying power to the load device. In this way, the switch unit can be automatically enabled when the power source supplies power, so that the power source automatically supplies power to the load device. The starting moment at which the load device outputs the second binary signal is earlier than the end moment at which the trigger unit outputs the first binary signal. Therefore, before the load device is energized, the control unit controls the switch unit to be closed under action of the first binary signal output by the trigger unit, and after the preset time, the trigger unit stops outputting the first binary signal. However, at this time, the control unit obtains the second binary signal output by the load device, and under action of the second binary signal, the control unit keeps outputting the switch control signal to the switch unit, so that the switch unit stays in a closed state, and the power source can continuously supply power to the load device. Therefore, rights of control over the switch unit are transferred from the trigger unit to the load device, so that the load device can control the path that supplies power to the load device.

FIG 10 is a method flowchart of a circuit control method according to an embodiment of this application. The circuit control method in this embodiment of this application may be applied to the control circuit provided in the foregoing embodiments. For the circuit control method in this embodiment of this application, refer to detailed descriptions of the control circuit in the foregoing embodiments.

The control circuit to which the circuit control method in this embodiment of this application is applied includes a switch unit, a trigger unit, and a control unit, where the trigger unit is connected to the control unit, and the control unit is connected to the switch unit. For specific descriptions of these units and devices as well as a power source and a load device, refer to corresponding descriptions of the control circuit in the foregoing embodiments.

Referring to the control circuit in the foregoing embodiments and the embodiment shown in FIG. 9, the following uses an example in which the trigger unit is a differential circuit, the power source is built-in battery of a vehicular telematics box, and the load device is the vehicular telematics box for description. The built-in battery of the vehicular telematics box is referred to as a built-in battery for short. For a specific schematic structural diagram of the circuit, refer to FIG. 4. The circuit control method in this embodiment of this application includes the following steps.

Step 1001: After obtaining an abrupt change of an electric signal output by the built-in battery, the differential circuit outputs a high level signal lasting for a preset time to the control unit.

The preset time is related to a device parameter of the differential circuit. Adjustment of the preset time may be implemented by using different devices to design the differential circuit.

For example, when a vehicular battery of a vehicular circuit is faulty, the vehicular battery does not supply power to the TBOX. To continue working or implement power-on, the TBOX needs to use electrical energy of the built-in battery. The built-in battery is inserted, and the electric signal output by the built-in battery abruptly changes from zero to a preset voltage. Because the differential circuit is connected to an output end of the built-in battery, after detecting the abrupt change of the electric signal output by the built-in battery, the differential circuit obtains a rectangular wave, and the differential circuit may convert the rectangular wave into a high level signal and outputs the high level signal to the control unit. Output of the high level signal lasts for the preset time.

Step 1002: The control unit outputs a switch control signal to the switch unit under action of the high level signal output by the differential circuit.

The differential circuit continuously outputs the high level signal for the preset time. Therefore, the high level signal continuously acts on the control unit for the preset time, and the control unit continuously outputs the switch control signal to the switch unit while obtaining the high level signal, so as to control the switch unit by using the switch control signal.

Step 1003: The switch unit establishes continuity in a path between the power source and the load device under action of the switch control signal.

One end of the switch unit is connected to the built-in battery, and the other end of the switch unit is connected to a power supply unit of the TBOX. Thereby, the switch unit controls continuity in the path between the built-in battery and the TBOX.

The switch unit obtains the switch control signal input by the control unit. The switch unit establishes continuity in the path between the built-in battery and the TBOX under action of the switch control signal while continuously obtaining the switch control signal, so that the built-in battery supplies power to the TBOX. After a system unit of the TBOX is energized, the system unit continuously outputs a high level signal to the control unit. A starting moment at which the TBOX outputs the high level signal is earlier than an end moment at which the differential circuit outputs the high level signal.

The control unit outputs the switch control signal to the switch unit when obtaining the high level signal. The high level signal output by the differential circuit lasts for the preset time, and the starting moment at which the TBOX outputs the high level signal is earlier than the end moment at which the differential circuit outputs the high level signal. This ensures that the control unit can still obtain a high level signal after the preset time, and this high level signal is output by the TBOX.

The high level signal output by the differential circuit is referred to as a first binary signal in some embodiments, and the high level signal output by the TBOX is referred to as a second binary signal in some embodiments.

Step 1004: The control unit outputs the switch control signal to the switch unit under action of a high level signal output by the TBOX.

The control unit continuously obtains the high level signal output by the TBOX and continuously outputs the switch control signal to the switch unit under action of the high level signal, so that the switch unit stays in a closed state under action of the switch control signal.

It can be learned from the above that the control unit outputs the switch control signal to the switch unit when obtaining the high level signal of the differential circuit, or when obtaining the high level signal of the TBOX, or when obtaining both the high level signal of the differential circuit and the high level signal of the TBOX; and the switch unit is closed under action of the switch control signal to establish continuity in the path between the built-in battery and the TBOX, so that the built-in battery supplies power to the TBOX. Therefore, in an energizing process of the TBOX, closing of the switch unit is first controlled by the differential circuit; and after the TBOX is energized, the TBOX outputs a high level signal to the control unit before the high level signal output by the differential circuit ends. At this time, the control unit obtains both the high level signal of the differential circuit and the high level signal output by the TBOX, and closing of the switch unit is controlled by both the TBOX and the differential circuit. After the preset time, output of the high level signal of the differential circuit is stopped, and the control unit obtains only the high level signal output by the TBOX, so that closing of the switch unit is controlled by the TBOX. In this way, according to the method in this embodiment of this application, after the built-in battery is inserted, the switch unit is automatically enabled to energize the TBOX, and rights of control over the power supply path between the built-in battery and the TBOX are transferred from the differential circuit to the TBOX.

Step 1005: The differential circuit outputs a low level signal after the preset time.

High level output by the differential circuit lasts for the preset time, and the rectangular wave is generated in the path when the built-in battery is inserted and a waveform output later is constant. Therefore, after the preset time, the differential circuit does not output a high level signal to the control unit, and may output a low level signal, for example, a signal whose voltage is zero, to the control unit. Because the control unit does not convert the low level signal into the switch control signal, the differential circuit no longer controls closing of the switch unit. The TBOX still outputs the high level signal to the control unit, and the control unit still outputs the switch control signal to the switch unit under action of the high level signal of the TBOX, so that the switch unit is still closed. The closed state of the switch unit is controlled by the TBOX in this case.

Step 1006: The control unit obtains a low level signal of the TBOX after the TBOX is de-energized.

After the TBOX is de-energized, for example, when the TBOX is powered off, the system unit of the TBOX is in a low level state, and the control unit no longer obtains a high level signal from the TBOX but obtains a low level signal.

Step 1007: The control unit stops outputting the switch control signal to the switch unit under action of the low level signal of the differential circuit and the low level signal of the TBOX.

The control unit outputs the switch control signal to the switch unit only under action of a high level signal. However, after the preset time, the differential unit outputs a low level signal, and after being de-energized, the TBOX also outputs only a low level signal. The control unit obtains only the low level signal at this time, and the control unit stops outputting the switch control signal to the switch unit.

It can be understood that step 1007 is a specific implementation of stopping outputting the switch control signal to the switch unit by the control unit when the first binary signal and the second binary signal are not obtained. Other implementations are included in some embodiments of this application. For example, the first binary signal and the second binary signal are not limited to high level signals.

Step 1008: The switch unit breaks continuity in the path between the built-in battery and the TBOX when the switch control signal is not obtained.

When the switch unit obtains the switch control signal, the switch unit is closed under action of the switch control signal. When the control unit stops outputting the switch control signal to the switch unit, the switch unit fails to obtain the switch control signal and changes into an open state, to break continuity in the power supply path between the built-in battery and the TBOX, so that the built-in battery is not connected to a device of the TBOX. This prevents electricity leakage caused by attachment of the built-in power source to the TBOX, and saves electrical energy of the built-in battery.

After the preset time, the control unit obtains only the high level signal output by the TBOX, and therefore continuity of the switch unit is controlled by the TBOX. Level of the TBOX in a working state after the TBOX is energized is higher than level of the TBOX in a power-off state after the TBOX is de-energized. In short, level of the TBOX after the TBOX is energized is higher than level of the TBOX after the TBOX is de-energized. Therefore, after the TBOX is de-energized, the control unit can obtain only a low level signal from the TBOX, and therefore stops outputting the switch control signal to the switch unit, and the switch unit changes from closed to open. In this way, output of the high level signal and the low level signal to the control unit by the TBOX does not need to be implemented by using a process of software logic, but is implemented by using a simple circuit connection. Therefore, a circuit implementing control of the TBOX over continuity of the switch unit is simple, and costs are reduced.

Therefore, according to the circuit control method in this embodiment of this application, after the TBOX built-in battery is inserted to supply power, the TBOX system can take over control over continuity of the path of the built-in battery, and after the TBOX system is de-energized, the path between the built-in battery and the back-end power supply unit may be cut off, thereby resolving a problem of power consumption of the built-in battery.

There are a plurality of implementing methods for the control unit and the switch unit in the circuit control method provided in this embodiment of this application. This embodiment of this application is not specifically limited in this sense. The control unit may process an obtained signal, to output a signal suitable for the switch unit. Several examples are listed for description.

### Example 1:

The switch unit is a low level enabled switch, and the control unit includes a phase inverter. The phase inverter may convert a high level signal into a low level signal, so as to output the low level signal to the low level enabled switch unit. Correspondingly, the first binary signal output by the trigger unit and/or the second binary signal output by the load device is a high level signal.

In this case, a specific implementation of the step that the control unit outputs the switch control signal to the switch unit under action of the first binary signal is: The control unit outputs a low level signal to the switch unit under action of the high level signal. The switch control signal is the low level signal. The control unit converts the high level signal output by the trigger unit into the low level signal by using the phase inverter. The low level signal is used as the switch control signal.

Correspondingly, a specific implementation of the step that the switch unit establishes continuity in a path between the power source and the load device under action of the switch control signal is: The switch unit establishes continuity in the path between the power source and the load device under action of the low level signal.

In another aspect, a specific implementation of the step that the control unit outputs the switch control signal to the switch unit under action of the second binary signal is: The control unit outputs a low level signal to the switch unit under action of the high level signal. For example, the control unit converts the high level signal output by the load device into a low level signal by using the phase inverter, and the low level signal is used as the switch control signal. Therefore, after the switch unit obtains the low level signal obtained based on the high level signal output by the load device, the switch unit establishes continuity in the path between the power source and the load device under action of the low level signal.

For a specific circuit diagram and implementation details, refer to FIG. 5a, FIG. 5b, and FIG. 6, and corresponding descriptions of the embodiments shown in FIG. 5a, FIG. 5b, and FIG. 6.

### Example 2:

The switch unit is a high level enabled switch, and the control unit includes an electric signal excitation device. When level output by the trigger unit and level output by the load device cannot drive the high level enabled switch unit, the electric signal excitation device may be integrated into the control unit, so that the control unit can perform excitation boost on the first binary signal and the second binary signal by using the electric signal excitation device, and output boosted level signals to the switch unit, to drive the switch unit to work.

In this case, a specific implementation of the step that the control unit outputs the switch control signal to the switch unit under action of the first binary signal is: The control unit outputs a high level signal to the switch unit under action of the first binary signal. For example, the control unit boosts, by using the electric signal excitation device, the first binary signal output by the trigger unit, to obtain a high level signal, and uses the high level signal as the switch control signal and outputs the high level signal to the switch unit. Then, a specific implementation of the step that the switch unit establishes continuity in a path between the power source and the load device under action of the switch control signal is: The switch unit establishes continuity in the path between the power source and the load device under action of the high level signal output by the control unit.

Similarly, a specific implementation of outputting, by the control unit, the switch control signal to the switch unit under action of the second binary signal is: outputting, by the control unit, a high level signal to the switch unit under action of the second binary signal. The control unit boosts, by using the electric signal excitation device, the second binary signal output by the load device, to obtain a high level signal, and uses the high level signal as the switch control signal and outputs the high level signal to the switch unit. After obtaining the high level signal, the switch unit is closed under action of the high level signal, to establish continuity in the path between the power source and the load device.

For a specific circuit diagram of this embodiment of this application, refer to FIG. 7a, FIG. 7b, and FIG. 8. For specific description of this embodiment of this application, refer to descriptions of the embodiments shown in FIG. 7a, FIG. 7b, and FIG 8.

By using the control circuit in this embodiment of this application in the TBOX circuit scenario, after the built-in battery of the TBOX circuit is inserted, the TBOX system can be automatically powered on. In addition, after the TBOX is powered on, the TBOX has rights of proactive control over the power supply path of the built-in battery. After the TBOX is powered off, a connection between the built-in battery and a back-end device, for example, the power supply unit, may be cut off, so as to resolve a problem of continuous electricity leakage of the built-in battery. In addition, because a circuit architecture design used by the control circuit in this embodiment of this application may be built by using simple detached electronic components, no complex dedicated software logic control is required. Therefore, development is not difficult and costs are low.

It can be understood that the foregoing descriptions of the control unit and the switch unit are examples, and the control circuit in this embodiment of this application may alternatively include other forms of control units and switch units.

It can be understood that the trigger unit may be a differential circuit, or an implementation such as a control chip. This embodiment of this application is not specifically limited in this sense.

It can be understood that the TBOX in the foregoing embodiment is only one specific implementation of the load device, and the load device in this embodiment of this application may alternatively be another type of device, for example, a motor or a control device.

To sum up, when the built-in battery starts supplying power to the TBOX but the switch unit provided in the path between the built-in battery and the TBOX is open, the differential circuit detects the abrupt change of the electric signal output by the built-in battery and outputs the high level signal to the control unit, so that the control unit outputs the switch control signal to the switch unit under action of the high level signal, and the switch unit establishes continuity in the path between the built-in battery and the TBOX under action of the switch control signal, for the built-in battery to supply power to the TBOX. After being energized, the TBOX continuously outputs the high level signal to the control unit, and the control unit outputs the switch control signal to the switch unit under action of the high level signal, so that the switch unit maintains continuity in the path between the built-in battery and the TBOX, for the built-in battery to continue supplying power to the TBOX. In this way, the switch unit is automatically enabled when the built-in battery supplies power, so that the built-in battery automatically supplies power to the TBOX. The starting moment at which the TBOX outputs the high level signal is earlier than the end moment at which the differential circuit outputs the high level signal. Therefore, before the TBOX is energized, the control unit controls the switch unit to be closed under action of the high level signal output by the differential circuit, and after the preset time, the differential circuit stops outputting the high level signal. However, at this time, the control unit obtains the high level signal output by the TBOX, and under action of the high level signal output by the TBOX, the control unit keeps outputting the switch control signal to the switch unit, so that the switch unit stays in a closed state, and the built-in battery can continuously supply power to the TBOX. Therefore, rights of control over the switch unit are transferred from the differential circuit to the TBOX, and the TBOX can control the path that supplies power to the TBOX.

In some embodiments of this application, a control circuit is provided. The control circuit includes a switch, a differential circuit, and a switch control circuit. The differential circuit is connected to the switch control circuit. The switch control circuit is connected to the switch. For more descriptions of the control circuit, refer to detailed descriptions of the embodiments shown in FIG. 2 to FIG. 8.

For the switch in the control circuit, refer to detailed descriptions of the switch unit in the foregoing embodiments of, for example, the control circuit and the circuit control method. Details are not repeated herein.

For the differential circuit in the control circuit, refer to detailed descriptions of the trigger unit and the differential circuit in the foregoing embodiments of, for example, the control circuit and the circuit control method. Details are not repeated herein.

For the switch control circuit in the control circuit, refer to detailed descriptions of the control unit in the foregoing embodiments of, for example, the control circuit and the circuit control method. Details are not repeated herein.

The switch control circuit includes a phase inverter or an electric signal excitation device. For specific description, refer to descriptions of the embodiments shown in FIG. 5a, FIG. 5b, FIG. 6, FIG. 7a, FIG. 7b, and FIG. 8.

In this way, the switch can be automatically enabled when a power source supplies power, so that the power source automatically supplies power to a load device. A starting moment at which the load device outputs a second binary signal is earlier than an end moment at which the differential circuit outputs a first binary signal. Therefore, before the load device is energized, the switch control circuit controls the switch to be closed under action of the first binary signal output by the differential circuit, and after a preset time, the differential circuit stops outputting the first binary signal. However, at this time, the switch control circuit obtains the second binary signal output by the load device, and under action of the second binary signal, the switch control circuit keeps outputting the switch control signal to the switch, so that the switch stays in a closed state, and the power source can continuously supply power to the load device. Therefore, rights of control over the switch are transferred from the differential circuit to the load device, so that the load device can control a path that supplies power to the load device. In this way, the power source can automatically supply power to the load device, and because the differential circuit outputs the first binary signal to the switch control circuit by obtaining an abrupt change of an electric signal output by the power source, to control the switch to be closed, in this case, controlling the switch to change from open to closed does not require that another device and the switch stay in an electrically-connected state. Therefore, electricity leakage is reduced, and the power source automatically supplies power to the load device in an energy-saving manner.

## Claims

1. A control circuit, wherein
the circuit comprises a switch unit, a trigger unit, and a control unit, wherein the trigger unit is connected to the control unit, and the control unit is connected to the switch unit;
the trigger unit is configured to: after obtaining an abrupt change of an electric signal (A) output by a power source when the power source starts supplying power, output a first binary signal (B) lasting for a preset time to the control unit;
the switch unit is configured to establish continuity in a path between the power source and a load device under action of a switch control signal (C), so that the power source supplies power (D) to the load device, and the load device continuously outputs a second binary signal (E) to the control unit after being energized, wherein a starting moment at which the load device outputs the second binary signal (E) is earlier than an end moment at which the trigger unit stops outputting the first binary signal (B); and
the control unit is configured to output a switch control signal (C) to the switch unit to establish continuity in the path between the power source and the load device, when receiving either or both of the first binary signal (B) and the second binary signal (E).

2. The circuit according to claim 1, wherein
the control unit is further configured to: when the first binary signal (B) and the second binary signal (E) are not obtained, stop outputting the switch control signal (C) to the switch unit; and
the switch unit is further configured to: when the switch control signal (C) is not obtained, break continuity in the path between the power source and the load device.

3. The circuit according to claim 1, wherein
the first binary signal (B) and the second binary signal (E) are high level signals, the switch unit is a low level enabled switch, and the control unit comprises a phase inverter;
the control unit is specifically configured to output a low level signal (C) to the switch unit under action of the high level signal; and
the switch unit is specifically configured to establish continuity in the path between the power source and the load device under action of the low level signal (C).

4. The circuit according to claim 1, wherein
the switch unit is a high level enabled switch, and the control unit comprises an electric signal excitation device;
the control unit is specifically configured to output a high level signal (C) to the switch unit under action of the first binary signal (B) and/or the second binary signal (E); and
the switch unit is specifically configured to establish continuity in the path between the power source and the load device under action of the high level signal (C) output by the control unit.

5. The circuit according to any one of claims 1 to 4, wherein
the trigger unit is a differential circuit.

6. The circuit according to any one of claims 1 to 4, wherein
the power source is a built-in battery of a vehicular telematics box, and the load device is the vehicular telematics box.

7. A circuit control method, wherein
the method is applied to a control circuit, and the control circuit comprises a switch unit, a trigger unit, and a control unit, wherein the trigger unit is connected to the control unit, and the control unit is connected to the switch unit; and
the method comprises:
after obtaining an abrupt change of an electric signal (A) output by a power source when the power source starts outputting power, outputting (901), by the trigger unit, a first binary signal (B) lasting for a preset time to the control unit;
establishing (903), by the switch unit, continuity in a path between the power source and a load device under action of a switch control signal, so that the power source supplies power (D) to the load device, and the load device continuously outputs a second binary signal (E) to the control unit after being energized, wherein a starting moment at which the load device outputs the second binary signal (E) is earlier than an end moment at which the trigger unit stops outputting the first binary signal (B); and
outputting (902, 904), by the control unit, the switch control signal (C) to the switch unit to establish continuity in the path between the power source and the load device, when receiving either or both of the first binary signal (B) and the second binary signal (E).

8. The method according to claim 7, wherein
after the outputting, by the control unit, the switch control signal (C) to the switch unit under action of the second binary signal (E), the method further comprises:
when the first binary signal (B) and the second binary signal (E) are not obtained, stopping, by the control unit, outputting the switch control signal (C) to the switch unit; and
when the switch control signal is not obtained, breaking, by the switch unit, continuity in the path between the power source and the load device.

9. The method according to claim 7, wherein
the first binary signal (B) is a high level signal, the switch unit is a low level enabled switch, and the control unit comprises a phase inverter;
the outputting, by the control unit, a switch control signal (C) to the switch unit under action of the first binary signal (B) comprises:
outputting, by the control unit, a low level signal (C) to the switch unit under action of the high level signal; and
the establishing, by the switch unit, continuity in a path between the power source and a load device under action of the switch control signal comprises:
establishing, by the switch unit, continuity in the path between the power source and the load device under action of the low level signal (C).

10. The method according to claim 7, wherein
the second binary signal (B) is a high level signal, the switch unit is a low level enabled switch, and the control unit comprises a phase inverter;
the outputting, by the control unit, the switch control signal (C) to the switch unit under action of the second binary signal comprises:
outputting, by the control unit, a low level signal (C) to the switch unit under action of the high level signal; and
the method further comprises:
establishing, by the switch unit, continuity in the path between the power source and the load device under action of the low level signal (C).

11. The method according to claim 7, wherein
the switch unit is a high level enabled switch, and the control unit comprises an electric signal excitation device;
the outputting, by the control unit, a switch control signal (C) to the switch unit under action of the first binary signal comprises:
outputting, by the control unit, a high level signal (C) to the switch unit under action of the first binary signal (B);
the establishing, by the switch unit, continuity in a path between the power source and a load device under action of the switch control signal (C) comprises:
establishing, by the switch unit, continuity in the path between the power source and the load device under action of the high level signal (C) output by the control unit; and
the outputting, by the control unit, the switch control signal (C) to the switch unit under action of the second binary signal (E) comprises:
outputting, by the control unit, a high level signal (C) to the switch unit under action of the second binary signal (E).

12. The method according to any one of claims 7 to 11, wherein
the trigger unit is a differential circuit.

13. The method according to any one of claims 7 to 11, wherein
the power source is a built-in battery of a vehicular telematics box, and the load device is the vehicular telematics box.

## Patentansprüche

1. Steuerungsschaltung, wobei
die Schaltung eine Schalteinheit, eine Auslöseeinheit und eine Steuerungseinheit umfasst, wobei die Auslöseeinheit mit der Steuerungseinheit verbunden ist und die Steuerungseinheit mit der Schalteinheit verbunden ist;
wobei die Auslöseeinheit ausgelegt ist zum: nach Erhalten einer abrupten Änderung eines elektrischen Signals (A), das durch eine Leistungsquelle ausgegeben wird, wenn die Leistungsquelle beginnt, Leistung zuzuführen, Ausgeben eines ersten binären Signals (B), das eine voreingestellte Zeit lang andauert, an die Steuerungseinheit; wobei die Schalteinheit ausgelegt ist zum Herstellen von Durchgang in einem Pfad zwischen der Leistungsquelle und einer Lastvorrichtung unter Aktion eines Schaltsteuerungssignals (C), sodass die Leistungsquelle Leistung (D) zur Lastvorrichtung zuführt, und wobei die Lastvorrichtung, nachdem sie angeregt wurde, kontinuierlich ein zweites binäres Signal (E) an die Steuerungseinheit ausgibt, wobei ein Startzeitpunkt, zu dem die Lastvorrichtung das zweite binäre Signal (E) ausgibt, früher ist als ein Endzeitpunkt, zu dem die Auslöseeinheit stoppt, das erste binäre Signal (B) auszugeben; und
wobei die Steuerungseinheit ausgelegt ist zum Ausgeben eines Schaltsteuerungssignals (C) an die Schalteinheit zum Herstellen von Durchgang im Pfad zwischen der Leistungsquelle und der Lastvorrichtung, beim Empfangen von einem oder beiden aus dem ersten binären Signal (B) und dem zweiten binären Signal (E).

2. Schaltung nach Anspruch 1, wobei
die Steuerungseinheit ferner ausgelegt ist zum: wenn das erste binäre Signal (B) und das zweite binäre Signal (E) nicht erhalten werden, Stoppen des Ausgebens des Schaltsteuerungssignals (C) an die Schalteinheit; und
wobei die Schalteinheit ferner ausgelegt ist zum: wenn das Schaltsteuerungssignal (C) nicht erhalten wird, Unterbrechen des Durchgangs im Pfad zwischen der Leistungsquelle und der Lastvorrichtung.

3. Schaltung nach Anspruch 1, wobei
das erste binäre Signal (B) und das zweite binäre Signal (E) Hochpegelsignale sind, die Schalteinheit ein tiefpegelaktivierter Schalter ist, und die Steuerungseinheit einen Phasenumkehrer umfasst,
die Steuerungseinheit speziell ausgelegt ist zum Ausgeben eines Tiefpegelsignals (C) an die Schalteinheit unter Aktion des Hochpegelsignals; und
die Schalteinheit speziell ausgelegt ist zum Herstellen von Durchgang im Pfad zwischen der Leistungsquelle und der Lastvorrichtung unter Aktion des Tiefpegelsignals (C).

4. Schaltung nach Anspruch 1, wobei
die Schalteinheit ein hochpegelaktivierter Schalter ist und die Steuerungseinheit eine elektrische Signalanregungsvorrichtung umfasst;
die Steuerungseinheit speziell ausgelegt ist zum Ausgeben eines Hochpegelsignals (C) an die Schalteinheit unter Aktion des ersten binären Signals (B) und/oder des zweiten binären Signals (E); und
die Schalteinheit speziell ausgelegt ist zum Herstellen von Durchgang im Pfad zwischen der Leistungsquelle und der Lastvorrichtung unter Aktion des durch die Steuerungseinheit ausgegebenen Hochpegelsignals (C).

5. Schaltung nach einem der Ansprüche 1 bis 4, wobei
die Auslöseeinheit eine Differenzialschaltung ist.

6. Schaltung nach einem der Ansprüche 1 bis 4, wobei
die Leistungsquelle eine integrierte Batterie einer Fahrzeugtelematikbox ist und die Lastvorrichtung die Fahrzeugtelematikbox ist.

7. Schaltungssteuerungsverfahren, wobei
das Verfahren auf eine Steuerungsschaltung angewendet wird und wobei die Steuerungsschaltung eine Schalteinheit, eine Auslöseeinheit und eine Steuerungseinheit umfasst, wobei die Auslöseeinheit mit der Steuerungseinheit verbunden ist und die Steuerungseinheit mit der Schalteinheit verbunden ist; und wobei das Verfahren Folgendes umfasst:
nach Erhalten einer abrupten Änderung eines elektrischen Signals (A), das durch eine Leistungsquelle ausgegeben wird, wenn die Leistungsquelle beginnt, Leistung auszugeben, Ausgeben (901), durch die Auslöseeinheit, eines ersten binären Signals (B), das eine voreingestellte Zeit lang andauert, an die Steuerungseinheit;
Herstellen (903), durch die Schalteinheit, von Durchgang in einem Pfad zwischen der Leistungsquelle und einer Lastvorrichtung unter Aktion eines Schaltsteuerungssignals, sodass die Leistungsquelle Leistung (D) zur Lastvorrichtung zuführt, und wobei die Lastvorrichtung, nachdem sie angeregt wurde, kontinuierlich ein zweites binäres Signal (E) an die Steuerungseinheit ausgibt, wobei ein Startzeitpunkt, zu dem die Lastvorrichtung das zweite binäre Signal (E) ausgibt, früher ist als ein Endzeitpunkt, zu dem die Auslöseeinheit stoppt, das erste binäre Signal (B) auszugeben; und
Ausgeben (902, 904), durch die Steuerungseinheit, des Schaltsteuerungssignals (C) an die Schalteinheit zum Herstellen von Durchgang im Pfad zwischen der Leistungsquelle und der Lastvorrichtung, beim Empfangen von einem oder beiden aus dem ersten binären Signal (B) und dem zweiten binären Signal (E).

8. Verfahren nach Anspruch 7, wobei:
nach dem Ausgeben, durch die Steuerungseinheit, des Schaltsteuerungssignals (C) an die Schalteinheit unter Aktion des zweiten binären Signals (E), das Verfahren ferner Folgendes umfasst:
wenn das erste binäre Signal (B) und das zweite binäre Signal (E) nicht erhalten werden, Stoppen, durch die Steuerungseinheit, des Ausgebens des Schaltsteuerungssignals (C) an die Schalteinheit; und
wenn das Schaltsteuerungssignal nicht erhalten wird, Unterbrechen, durch die Schalteinheit, von Durchgang im Pfad zwischen der Leistungsquelle und der Lastvorrichtung.

9. Verfahren nach Anspruch 7, wobei:
das erste binäre Signal (B) ein Hochpegelsignal ist, die Schalteinheit ein tiefpegelaktivierter Schalter ist und die Steuerungseinheit einen Phasenumkehrer umfasst;
das Ausgeben, durch die Steuerungseinheit, eines Schaltsteuerungssignals (C) an die Schalteinheit unter Aktion des ersten binären Signals (B) Folgendes umfasst:
Ausgeben, durch die Steuerungseinheit, eines Tiefpegelsignals (C) an die Schalteinheit unter Aktion des Hochpegelsignals; und
wobei das Herstellen, durch die Schalteinheit, von Durchgang in einem Pfad zwischen der Leistungsquelle und einer Lastvorrichtung unter Aktion des Schaltsteuerungssignals Folgendes umfasst:
Herstellen, durch die Schalteinheit, von Durchgang in dem Pfad zwischen der Leistungsquelle und der Lastvorrichtung unter Aktion des Tiefpegelsignals (C).

10. Verfahren nach Anspruch 7, wobei:
das zweite binäre Signal (B) ein Hochpegelsignal ist, die Schalteinheit ein tiefpegelaktivierter Schalter ist und die Steuerungseinheit einen Phasenumkehrer umfasst;
das Ausgeben, durch die Steuerungseinheit, des Schaltsteuerungssignals (C) an die Schalteinheit unter Aktion des zweiten binären Signals Folgendes umfasst:
Ausgeben, durch die Steuerungseinheit, eines Tiefpegelsignals (C) an die Schalteinheit unter Aktion des Hochpegelsignals; und
wobei das Verfahren ferner Folgendes umfasst:
Herstellen, durch die Schalteinheit, von Durchgang in dem Pfad zwischen der Leistungsquelle und der Lastvorrichtung unter Aktion des Tiefpegelsignals (C).

11. Verfahren nach Anspruch 7, wobei:
die Schalteinheit ein hochpegelaktivierter Schalter ist und die Steuerungseinheit eine elektrische Signalanregungsvorrichtung umfasst;
das Ausgeben, durch die Steuerungseinheit, eines Schaltsteuerungssignals (C) an die Schalteinheit unter Aktion des ersten binären Signals Folgendes umfasst:
Ausgeben, durch die Steuerungseinheit, eines Hochpegelsignals (C) an die Schalteinheit unter Aktion des ersten binären Signals (B);
wobei das Herstellen, durch die Schalteinheit, von Durchgang in einem Pfad zwischen der Leistungsquelle und einer Lastvorrichtung unter Aktion des Schaltsteuerungssignals (C) Folgendes umfasst:
Herstellen, durch die Schalteinheit, von Durchgang in dem Pfad zwischen der Leistungsquelle und der Lastvorrichtung unter Aktion des durch die Steuerungseinheit ausgegebenen Hochpegelsignals (C); und
wobei das Ausgeben, durch die Steuerungseinheit, des Schaltsteuerungssignals (C) an die Schalteinheit unter Aktion des zweiten binären Signals (E) Folgendes umfasst:
Ausgeben, durch die Steuerungseinheit, eines Hochpegelsignals (C) an die Schalteinheit unter Aktion des zweiten binären Signals (E).

12. Verfahren nach einem der Ansprüche 7 bis 11, wobei
die Auslöseeinheit eine Differenzialschaltung ist.

13. Verfahren nach einem der Ansprüche 7 bis 11, wobei
die Leistungsquelle eine integrierte Batterie einer Fahrzeugtelematikbox ist und die Lastvorrichtung die Fahrzeugtelematikbox ist.

## Revendications

1. Circuit de commande,
le circuit comportant une unité de commutation, une unité de déclenchement, et une unité de commande, l'unité de déclenchement étant reliée à l'unité de commande, et l'unité de commande étant reliée à l'unité de commutation ;
l'unité de déclenchement étant configurée pour : après avoir acquis un changement soudain d'un signal électrique (A) délivré par une source d'alimentation lorsque la source d'alimentation commence à fournir une alimentation, délivrer à l'unité de commande un premier signal binaire (B) qui dure un temps prédéfini ;
l'unité de commutation étant configurée pour établir la continuité dans un trajet entre la source d'alimentation et un dispositif consommateur sous l'action d'un signal (C) de commande de commutation, de telle sorte que la source d'alimentation fournisse une alimentation (D) au dispositif consommateur, et que le dispositif consommateur délivre de manière continue un second signal binaire (E) à l'unité de commande après avoir été mis sous tension, un instant de début auquel le dispositif consommateur délivre le second signal binaire (E) étant antérieur à un instant de fin auquel l'unité de déclenchement cesse de délivrer le premier signal binaire (B) ; et l'unité de commande étant configurée pour délivrer un signal (C) de commande de commutation à l'unité de commutation afin d'établir la continuité dans le trajet entre la source d'alimentation et le dispositif consommateur, lors de la réception du premier signal binaire (B) et/ou du second signal binaire (E).

2. Circuit selon la revendication 1,
l'unité de commande étant en outre configurée pour : lorsque le premier signal binaire (B) et le second signal binaire (E) ne sont pas obtenus, cesser de délivrer le signal (C) de commande de commutation à l'unité de commutation ; et l'unité de commutation étant en outre configurée pour : lorsque le signal (C) de commande de commutation n'est pas obtenu, rompre la continuité dans le trajet entre la source d'alimentation et le dispositif consommateur.

3. Circuit selon la revendication 1,
le premier signal binaire (B) et le second signal binaire (E) étant des signaux de niveau haut, l'unité de commutation étant un commutateur activé par un niveau bas, et l'unité de commande comportant un inverseur de phase ;
l'unité de commande étant spécifiquement configurée pour délivrer un signal (C) de niveau bas à l'unité de commutation sous l'action du signal de niveau haut ; et l'unité de commutation étant spécifiquement configurée pour établir la continuité dans le trajet entre la source d'alimentation et le dispositif consommateur sous l'action du signal (C) de niveau bas.

4. Circuit selon la revendication 1,
l'unité de commutation étant un commutateur activé par un niveau haut, et l'unité de commande comportant un dispositif d'excitation à signal électrique ;
l'unité de commande étant spécifiquement configurée pour délivrer un signal (C) de niveau haut à l'unité de commutation sous l'action du premier signal binaire (B) et/ou du second signal binaire (E) ; et
l'unité de commutation étant spécifiquement configurée pour établir la continuité dans le trajet entre la source d'alimentation et le dispositif consommateur sous l'action du signal (C) de niveau haut délivré par l'unité de commande.

5. Circuit selon l'une quelconque des revendications 1 à 4,
l'unité de déclenchement étant un circuit différentiel.

6. Circuit selon l'une quelconque des revendications 1 à 4,
la source d'alimentation étant une batterie incorporée d'un boîtier télématique de véhicule, et le dispositif consommateur étant le boîtier télématique de véhicule.

7. Procédé de commande de circuit,
le procédé étant appliqué à un circuit de commande, et le circuit de commande comportant une unité de commutation, une unité de déclenchement, et une unité de commande, l'unité de déclenchement étant reliée à l'unité de commande, et l'unité de commande étant reliée à l'unité de commutation ; et
le procédé comportant :
après avoir acquis un changement soudain d'un signal électrique (A) délivré par une source d'alimentation lorsque la source d'alimentation commence à délivrer une alimentation, la délivrance (901) à l'unité de commande, par l'unité de déclenchement, d'un premier signal binaire (B) qui dure un temps prédéfini ;
l'établissement (903), par l'unité de commutation, de la continuité dans un trajet entre la source d'alimentation et un dispositif consommateur sous l'action d'un signal de commande de commutation, de telle sorte que la source d'alimentation fournisse une alimentation (D) au dispositif consommateur, et que le dispositif consommateur délivre de manière continue un second signal binaire (E) à l'unité de commande après avoir été mis sous tension, un instant de début auquel le dispositif consommateur délivre le second signal binaire (E) étant antérieur à un instant de fin auquel l'unité de déclenchement cesse de délivrer le premier signal binaire (B) ; et
la délivrance (902, 904), par l'unité de commande, du signal (C) de commande de commutation à l'unité de commutation pour établir la continuité dans le trajet entre la source d'alimentation et le dispositif consommateur, lors de la réception du premier signal binaire (B) et/ou du second signal binaire (E).

8. Procédé selon la revendication 7,
le procédé comportant en outre, après la délivrance, par l'unité de commande, du signal (C) de commande de commutation à l'unité de commutation sous l'action du second signal binaire (E) :
lorsque le premier signal binaire (B) et le second signal binaire (E) ne sont pas obtenus, la cessation, par l'unité de commande, de la délivrance du signal (C) de commande de commutation à l'unité de commutation ; et
lorsque le signal de commande de commutation n'est pas obtenu, la rupture, par l'unité de commutation, de la continuité dans le trajet entre la source d'alimentation et le dispositif consommateur.

9. Procédé selon la revendication 7,
le premier signal binaire (B) étant un signal de niveau haut, l'unité de commutation étant un commutateur activé par un niveau bas, et l'unité de commande comportant un inverseur de phase ;
la délivrance, par l'unité de commande, d'un signal (C) de commande de commutation à l'unité de commutation sous l'action du premier signal binaire (B) comportant :
la délivrance, par l'unité de commande, d'un signal (C) de niveau bas à l'unité de commutation sous l'action du signal de niveau haut ; et
l'établissement, par l'unité de commutation, de la continuité dans un trajet entre la source d'alimentation et un dispositif consommateur sous l'action du signal de commande de commutation comportant :
l'établissement, par l'unité de commutation, de la continuité dans le trajet entre la source d'alimentation et le dispositif consommateur sous l'action du signal (C) de niveau bas.

10. Procédé selon la revendication 7,
le second signal binaire (B) étant un signal de niveau haut, l'unité de commutation étant un commutateur activé par un niveau bas, et l'unité de commande comportant un inverseur de phase ;
la délivrance, par l'unité de commande, du signal (C) de commande de commutation à l'unité de commutation sous l'action du second signal binaire comportant :
la délivrance, par l'unité de commande, d'un signal (C) de niveau bas à l'unité de commutation sous l'action du signal de niveau haut ; et
le procédé comportant en outre :
l'établissement, par l'unité de commutation, de la continuité dans le trajet entre la source d'alimentation et le dispositif consommateur sous l'action du signal (C) de niveau bas.

11. Procédé selon la revendication 7,
l'unité de commutation étant un commutateur activé par un niveau haut, et l'unité de commande comportant un dispositif d'excitation à signal électrique ;
la délivrance, par l'unité de commande, d'un signal (C) de commande de commutation à l'unité de commutation sous l'action du premier signal binaire comportant :
la délivrance, par l'unité de commande, d'un signal (C) de niveau haut à l'unité de commutation sous l'action du premier signal binaire (B) ;
l'établissement, par l'unité de commutation, de la continuité dans un trajet entre la source d'alimentation et un dispositif consommateur sous l'action du signal (C) de commande de commutation comportant :
l'établissement, par l'unité de commutation, de la continuité dans le trajet entre la source d'alimentation et le dispositif consommateur sous l'action du signal (C) de niveau haut délivré par l'unité de commande ; et
la délivrance, par l'unité de commande, du signal (C) de commande de commutation à l'unité de commutation sous l'action du second signal binaire (E) comportant :
la délivrance, par l'unité de commande, d'un signal (C) de niveau haut à l'unité de commutation sous l'action du second signal binaire (E).

12. Procédé selon l'une quelconque des revendications 7 à 11,
l'unité de déclenchement étant un circuit différentiel.

13. Procédé selon l'une quelconque des revendications 7 à 11,
la source d'alimentation étant une batterie incorporée d'un boîtier télématique de véhicule, et le dispositif consommateur étant le boîtier télématique de véhicule.
